(19) Europäisches Patentamt / European Patent Office / Office européen des brevets

(11) **EP 3 898 358 B1**

(12) **EUROPÄISCHE PATENTSCHRIFT**

(45) Veröffentlichungstag und Bekanntmachung des Hinweises auf die Patenterteilung:
**07.06.2023  Patentblatt 2023/23**

(21) Anmeldenummer: **19831584.8**

(22) Anmeldetag: **20.12.2019**

(51) Internationale Patentklassifikation (IPC):
**B60T 13/58** *(2006.01)*    **B60T 13/74** *(2006.01)*

(52) Gemeinsame Patentklassifikation (CPC):
**B60T 13/588; B60T 13/745;** B60T 2270/402

(86) Internationale Anmeldenummer:
**PCT/EP2019/086869**

(87) Internationale Veröffentlichungsnummer:
**WO 2020/128080 (25.06.2020 Gazette 2020/26)**

(54) **REDUNDANTES BREMSSYSTEM MIT EINER DRUCKVERSORGUNG FÜR E-FAHRZEUGE UND FAHRZEUGE MIT AUTONOMEM FAHREN DER STUFE 3 (HAD) BIS STUFE 4 (FAD)**

REDUNDANT BRAKE SYSTEM WITH PRESSURE SUPPLY FOR ELECTRIC VEHICLE AND VEHICLE WITH CATEGORY 3 TO 4 AUTONOMOUS DRIVE

SYSTÈME DE FREINS AVEC ALIMENTATION EN PRESSION POUR VÉHICULE ÉLECTRIQUE ET VEHICULE AVEC CONDUITE AUTONOME DE CATEGORIE 3 À 4.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018  DE 102018133218
10.07.2019  DE 202019107191 U
30.08.2019  DE 202019107193 U**

(43) Veröffentlichungstag der Anmeldung:
**27.10.2021  Patentblatt 2021/43**

(60) Teilanmeldung:
**23161067.6**

(73) Patentinhaber: **IPGATE AG
8808 Pfäffikon SZ (CH)**

(72) Erfinder: **LEIBER, Thomas
22203 Rogoznica (HR)**

(74) Vertreter: **Felber, Josef et al
Felber & Partner AG
Dufourstrasse 116
8008 Zürich (CH)**

(56) Entgegenhaltungen:
**EP-A1- 3 208 162      WO-A1-2013/140221
DE-A1-102011 084 206   DE-U1-202015 008 975
DE-U1-202015 008 976**

## Beschreibung

Die vorliegende Erfindung betrifft eine Vorrichtung für ein hydraulisches Betätigungssystem für eine Bremse für Elektrofahrzeuge und insbesondere Fahrzeuge mit hochautomatisiertem (HAD) oder vollautomatisiertem Fahren (FAD)

## Stand der Technik

Die Automobilindustrie befindet sich in einem disruptiven Veränderungsprozess. Neben der zunehmenden Marktdurchdringung von Elektrofahrzeugen werden verschiedene Stufen des automatisierten Fahrens durchlaufen, dies sind zunächst: Stufe 3 - Hoch Automatisiertes Fahren - HAD, Stufe 4 - Voll Automatisiertes Fahren - FAD und Stufe 5 - Autonomes Fahren - AD, wobei bei jeder Stufe die Anforderungen an die verwendeten Bremssysteme steigen. Hierdurch wurde die Entwicklung von neuen Bremssystemen vorangetrieben.

Die Ablösung von Vakuumbremskraftverstärkern durch elektrische Bremskraftverstärker (e-BKV) begann 2005 nach ersten Lösungsansätzen [ATZ Ausgabe 6/11] mit der Markteinführung von sog. 2-Box-Lösungen mit elektrischen Folgebremskraftverstärkern und zusätzlicher ESP-Einheit im Jahr 2013 [ATZ-Ausgabe 4/18], zeitnah gefolgt durch erste integrierte 1-Box Systeme mit Pedalsimulator im Jahr 2017 [Bremsenhandbuch - Kapitel 20]. Aktuell werden Lösungen für die Stufe 3 (HAD) entwickelt.

Ab Stufe 3 (HAD) ist eine redundante Druckversorgung erstmalig zwingend erforderlich. Zudem ist eine Verbindung der Bremskreise mit dem Vorratsbehälter bei offenen Bremssystemen weitestgehend zu vermeiden und Pedalgefühlsimulatoren mit konstanter Pedalcharakteristik einzusetzen. Weiter muss auch eine Redundanz der ABS-Funktion bereitgestellt werden. Dies wird bei sog. 2-Box-Systemen mit elektrischem Bremskraftverstärker und ESP/ABS-Aggregat gemäß Stand der Technik gemäß DE 11 2009 005 541 B3 derart realisiert, dass der elektrische Bremskraftverstärker (e-BKV) eine Druckmodulations-Funktion bei Ausfall des ESP-Aggregates übernimmt, um stets eine hohe Fahrzeugverzögerung zu gewährleisten. Hier wurde im ersten Schritt eine sog. "ABS select-low Regelung" eingeführt.

Ab Stufe 4 (FAD) werden für ausreichende Systemverfügbarkeit 3-fach Redundanzen erwartet, z.B. bei den Pedalsensoren mit der Regel "2 aus 3". Zudem ist ein Pedalsimulator wegen zunehmender Rekuperationsleistung von Elektrofahrzeugen und fehlender Akzeptanz der Veränderung der Pedalcharakteristik zwingend, weil vollautomatisches Fahren (FAD) über eine längere Zeitdauer betrieben werden kann und der Fahrer bei Übergang auf pilotiertes Fahren nicht auf eine Veränderung der Pedalcharakteristik vorbereitet ist. Zur Überwachung der Druckversorgung ist ein redundanter Druckgeber vorzusehen bzw. eine alternative Diagnosemöglichkeit vorzusehen. Weiter wird eine redundante ABS-Funktion mit zumindest achsindividueller Regelung gefordert werden und es werden Teilredundanzen eingeführt. Bremssysteme mit geschlossenen Bremskreisen im ABS-Betrieb haben Sicherheitsvorteile.

In Stufe 5 (AD) sind Pedalweggeber und Pedalsimulator sowie deren Charakteristik nicht mehr relevant. Dagegen werden die restlichen Komponenten und Teilsysteme eine 3-fach Redundanz, mit der Regel "2 aus 3" bei Sensoren, Steuer- und Regeleinheiten ECU und Teil-ECU, oder mehrfach Redundanz, aufweisen. Zudem ist eine vollkommene Redundanz für die radindividuelle Regelung vorzusehen.

Mehrere neue Fahrzeughersteller wie z.B. Apple, Uber oder Waymo arbeiten an komplett autonom fahrenden Fahrzeugen ohne Fahrer, die in der ersten Ausbaustufe ein Bremspedal mit einfacher Pedalgefühlsimulatoreinheit aufweisen (Stufe 4 FAD) und in der letzten Ausbaustufe (Stufe 5 AD) kein Bremspedal mehr haben sollen. Zudem setzen sich Fahrzeuge mit starken elektrischen Antriebsmotoren sowohl an der Hinterachse als auch an der Vorderachse zunehmend durch.

Neben den beschriebenen elektrohydraulischen Bremssystemen gibt es die elektromechanische Bremse (EMB, elektromechanische Keilbremse) als bekannten Lösungsansatz. Die EMB hat sich in der Vergangenheit aufgrund von Sicherheitsbedenken und hohen Kosten nicht durchgesetzt. Die hohen Kosten sind insbesondere darin begründet, dass für jede Radbremse ein Elektromotor sowie ein aufwändiger elektromechanischer Mechanismus erforderlich ist. Zudem hat eine EMB sehr viele elektrische Kontaktstellen, die bekanntlich fehleranfälliger als hydraulische Leitungen sind.

Bremssysteme für die Stufen FAD und AD können aus Kosten- und Zuverlässigkeitsgründen nicht ausschließlich EMB oder Keilbremsen aufweisen. Eine EMB ist nur für die Hinterachse eines Fahrzeuges geeignet, weil die Hinterachse geringeren Anteil an der Bremskraft hat und ein Ausfall nicht so kritisch betrachtet wird wie an der Vorderachse. So ist ein hydraulisches Bremssystem mit Regelung im vorwiegenden geschlossenen Bremskreis über eine elektrische angetriebene Kolben-Zylinder-Einheit zu präferieren.

In DE 10 2005 055 751 B4 und DE 10 2005 018 649 B4 ist die hochpräzise Kolbendruckregelung (PPC = Piston Pressure Control) mittels einer elektrisch angetriebenen Kolben-Zylinder-Einheit mit Spindeltrieb ausgeführt. Der Druck wird unter Verwendung eines nichtlinearen Kennfeldes, der sog. Druck-Volumen-Kennlinie gesteuert, in dem der Zusammenhang zwischen Druck und Kolbenposition ausgewertet wird. Alternativ oder ergänzend wird der Druck durch Phasenstromsteuerung des Elektromotors genutzt, wobei der physikalische Zusammenhang der Proportionalität zwischen Strom zu Drehmoment und aufgrund einer bekannten Kolbenfläche und festen Getriebeübersetzung auch Proportionalität zwischen Strom und Druck besteht und genutzt wird. Mit diesen beiden Kenngrößen kann der Druck und der Druckänderungsverlauf sehr genau geregelt werden.

In EP 1 874 602 B1 und EP 2 396 202 B1 ist das sog. Multiplex-Verfahren (MUX) beschrieben, dass sich besonders für die Anforderungen der Stufe 4 und 5 eignet, da ein geschlossenes Bremssystem, wie später ausgeführt, keine schlafenden Fehler aufweist. Zudem können mehrere Radbremsen mit nur je einem Schaltventil gleichzeitig oder nacheinander im Druck auf- und abgebaut werden. Nachteilig sind die hohen Dynamikanforderungen an den Elektromotor, insbesondere wenn alle Radbremsen mit einem Motor geregelt werden. Dies erfordert einen speziellen Motor mit doppelten Luftspalt (EP 1 759 447 B1) oder einen Motor mit sehr geringer Trägheitsmasse.

In WO201614622A2 ist zudem eine spezielle Ventilschaltung von Schaltventilen ausgeführt, wo der Innenraum des Schaltventils über eine Hydraulikleitung mit dem zugehörigen Bremskreis und der Ventilsitzausgleich über eine Hydraulikleitung mit der zugehörigen Radbremse verbunden ist. Diese Ventilschaltung ist insbesondere für das MUX-Verfahren mit nur einem Schaltventil pro Bremskreis geeignet, da sich im Fehlerfall das Magnetventil durch den Druck in der Radbremse öffnet und damit verhindert, dass der Druck in der Radbremse eingesperrt bleibt, was zur ungewollten Fahrzeugverzögerung führt.

Aus EP 3 271 221 A2 ist ein weiterentwickeltes MUX-Verfahren (MUX 2.0) mit nur einem Auslassventil je Bremskreis bekannt. Damit können die Dynamikanforderungen für den Multiplex-Betrieb deutlich reduziert werden, weil Druck auch über Auslassventile in Situationen mit extrem hohen Druckänderungsdynamikanforderungen abgebaut werden kann und das Bremssystem im Normalbetrieb im geschlossenen Bremskreis betrieben wird. Hierdurch können die Dynamikanforderungen an den Elektromotor deutlich reduziert werden bzw. eine sehr gute Regelung im Multiplex-Verfahren erreicht werden.

Aus WO 2012 059 175 A1 ist eine vorteilhafte Betätigungseinheit (BE) mit zwei Wegsensoren und dazwischen wirkendem elastischem Element bekannt, womit Differenzwege und/oder Differenzkräfte gemessen und von der Steuerung des Bremssystems verwertet werden. Ein Bremssystem mit einer derartigen Betätigungseinheit ergänzt um einen Pedalgefühlsimulator erfordert Anforderungen an Mehrfachredundanzen der Stufe 3 bis Stufe 5.

Ein weiteres Beispiel vom Stand der Technik ist im Dokument WO 2013/140221 A1 offenbart.

Bestimmte Komponenten von Bremssystemen sind als sicherheitskritisch zu betrachten. Dies sind Dichtungen von Kolben, Magnetventile und Kugelgewindetrieb. In der nachfolgenden sind verschiedene Fehler und deren Auswirkungen aufgeführt:

- Kolben: Kolbendichtungen können ausfallen, wobei die Undichtigkeit z.B. noch nicht bei kleinen Drücken, sondern erst bei hohem Drücken auftreten kann. Eine Undichtigkeit führt zu einem Ausfall der Kolbenfunktion. Kolben werden in Wegsimulatoren, Druckversorgungen und Hauptbremszylindern (HZ) eingesetzt und können zu Pedaldurchfall bzw. Ausfall der Druckversorgung führen.
- Magnetventile: Schmutzpartikel können sich im Ventilsitz absetzen. Wenn Magnetventile in einem offenen Bremssystem z.B. mit dem Vorratsbehälter verbunden sind, können sich beim Schließvorgang Partikel absetzen und die Verbindung ist nicht dicht. Die Dichtigkeit kann im geöffneten Zustand nicht diagnostiziert werden.
- Kugel-Gewinde-Trieb: Kugel-Gewinde-Triebe verschleißen über Lebensdauer und können klemmen, insbesondere wenn Schmutzpartikel in den Kugel-Gewinde-Trieb gelangen. Dies kann zu Ausfällen der Druckversorgung führen.

Die Anforderungen für Bremssysteme der Stufe 3 (HAD), Stufe 4 (FAD) und Stufe 5 (AD) und bei E-Fahrzeugen, die zunehmend starke elektrische Antriebsmotoren an einer oder mehreren Achsen aufweisen, lassen sich wie folgt zusammenfassen:

- absolut geräuschloser Betrieb, d.h. keine störenden Geräusche von Aggregaten an der Spritzwand;
- noch kürzere Bauweise als bei konventionellen PKWs aufgrund neuer Fahrzeug-Plattformkonzepten bei E-Fahrzeugen;
- Radindividueller oder achsindividueller Bremseingriff, auch bei Komplett- oder Teilausfall von Modulen;
- Funktionsumfang ABS, ESP, ASR, Rekuperation und Torque Vectoring mit möglichst geringer Einschränkung der Leistungsfähigkeit auch bei Komplett- oder Teilausfall von Modulen;
- Maximale Rekuperation der kinetischen Energie des Fahrzeuges durch maximale Ausnutzung der Bremsleistung durch Elektromotoren; daher dynamische und genaue bedarfsgerechte Steuerung des hydraulischen Bremssystems;
- Nutzung von verfügbaren Bremsmomenten, z.B. von Antriebsmotoren für Vereinfachung der Bremssysteme bzw. Verkürzung des Bremsweges;
- Verstärkte Sicherheit durch Redundanz der Systeme, Signalübertragungen und Stromversorgung;
- Diagnoseverfahren zur Erkennung von Leckagen bzw. Vermeidung schlafender Fehler;
- hohe Anforderungen an die Regelgenauigkeit zur weiteren Bremswegverkürzung, insbesondere beim gemeinsamen Wirken von elektrischen Antriebsmotoren und hydraulischen Bremsmomenten;
- hohe Modularität der Systeme, d.h. der Verwendung von gleichen Teilen/Modulen, insbesondere bei der Druckversorgung; Modularität ist getrieben durch eine Vielzahl an Fahrzeugantriebskonzepten, insbesondere in einer Koexistenz von Fahrzeugen mit Verbrennungsmotoren, Hybridfahrzeugen und reinen E-Fahrzeugen (Verbrennungsmotoren, Hybridmotoren, reine E-Fahrzeuge, fahrerlose Fahrzeuge).

## Aufgabe der Erfindung

Aufgabe der vorliegenden Erfindung ist es, ein Bremssystem bereitzustellen, das für die Anforderungen der hohen Verfügbarkeit beim hochautomatisierten Fahren (HAD) und vollautomatisierten Fahren (FAD) erfüllt und auch für E-Fahrzeuge geeignet ist.

## Lösung der Aufgabe

Die Aufgabe der Erfindung wird durch ein Bremssystem mit den Merkmalen des Patentanspruchs 1 gelöst. Vorteilhafte Ausgestaltungen des Bremssystems nach Anspruch 1 ergeben sich durch die Merkmale der Unteransprüche.

Die Erfindung zeichnet sich vorteilhaft dadurch aus, dass das erfindungsgemäße Bremssystem eine genügend hohe Redundanz von systemrelevanten Komponenten für das hochautomatisierte vollautomatisierte Fahren (HAD, FAD) bereitstellt und gleichzeitig hohe Synergieeffekte im Zusammenwirken des Bremssystems mit elektrischen Antriebsmotoren von Elektrofahrzeugen genutzt werden können. So ist beispielweise die Energierückgewinnung von kinetischer Energie durch den Elektromotor nicht durch das Bremssystem wie zum Beispiel bei Folgebremskraftverstärkern ohne Wegsimulator gemäß DE 11 2009 005 541 B3 eingeschränkt, gleichzeitig kann der Elektromotor zum Bremsen beitragen. So wird das erfindungsgemäße Bremssystem vorteilhaft für HAD und FAD mit einer Betätigungseinheit (BE) mit Pedalfühlsimulator ausgestattet.

Für die Stufe 4 (FAD) sollte für das vollautomatisierte Fahren eine Betätigungseinheit mit entsprechenden Redundanzen vorgesehen werden. Die Betätigungseinheit weist dabei eine hydraulische Verbindung zu mindestens einem Bremskreis auf.

Es ist zudem vorteilhaft, eine zentrale Regel- und Steuereinheit (M-ECU) vorzusehen, die den einzelnen Komponenten des Bremssystems übergeordnet ist und diese steuert.

Für die radindividuelle redundante Bremsregelung sieht die Erfindung in einer Basisausführungsform vor, dass eine Druckversorgungseinrichtung die Druckregelung entweder in nur einer Achse oder in beiden Achsen des Fahrzeugs vornimmt. Dabei weist die Druckversorgungseinrichtung vorteilhaft zwei voneinander unabhängige elektronische Steuer- und Regeleinheiten oder eine zweifach-redundante Steuer- und Regeleinheit zur Ansteuerung ihres elektromotorischen Antriebs auf, derart, dass bei Ausfall einer Steuer- und Regeleinheit die andere noch funktionsfähige Steuer- und Regeleinheit den Antrieb noch ansteuern kann.

Jede der beiden elektronischen Steuer- und Regeleinheiten steuert dabei vorteilhaft voneinander getrennte Wicklungs- bzw. Phasensysteme des elektromotorischen Antriebs an. Hierdurch ist vorteilhaft gewährleistet, dass bei Ausfall eines Wicklungs- bzw. Phasensystems der Antriebsmotor zumindest noch mit einem verminderten, z.B. dem halben maximalen, Drehmoment betrieben werden kann. Durch diese Ausbildung ist eine mehrfache Redundanz zumindest für die Druckversorgungseinrichtung und deren Ansteuerung gegeben.

In einer weiteren Ausführungsform kann die Druckversorgungseinrichtung zusammen mit der Ventilanordnung und der mindestens einen, der Druckversorgungseinrichtung zugeordneten elektronische Steuer- und Regeleinheit zu einem Modul bzw. Baugruppe zusammengefasst sein. Hierdurch ergibt sich eine kompakte und kostengünstige Einheit, die platzsparend und einfach in dem Fahrzeug untergebracht und montiert werden kann.

Die Betätigungseinrichtung, insbesondere in Form eines Bremspedals, wirkt vorteilhaft auf eine Kolben-Zylinder-Einheit, wobei über eine hydraulische Verbindung zu mindestens einem Bremskreis im Fehlerfalle ein Bremsdruck mit der Betätigungseinrichtung aufbaubar ist. Hierbei kann ein einfacher Hauptbremszylinder oder ein Tandem-Hauptzylinder, optional mit redundanten Dichtungen, und zwingend erforderlichem Wegsimulator vorgesehen werden.

Vorteilhaft regeln die vorbeschriebenen Bremssysteme im Regelbetrieb mit geschlossenem Bremskreis, d.h. im Regelbetrieb erfolgt kein Druckabbau über Magnetventile in den Vorratsbehälter, und/oder der Druck in den Radbremsen des jeweiligen Bremskreises wird im Multiplexverfahren und/oder gleichzeitig eingeregelt bzw. eingestellt. Zur Sicherheit sollten die Schaltventile derart an die Radbremsen angeschlossen sein, dass sie sich durch Druck in der Radbremse selbstständig öffnen. Hierdurch ist vorteilhaft gewährleistet, dass in jedem Fall der Bremsdruck in den Radbremsen abgebaut werden kann und es nicht zu unerwünschtem Abbremsen bzw. Blockieren der Räder kommt.

Ebenso ist es von Vorteil, wenn bei den vorbeschriebenen Bremssystemen ein Druckabbau im Regelbetrieb, insbesondere bei sehr hohen Druckdynamikanforderungen z.B. bei high-$\mu$-ABS-Regelung, insbesondere bei Ausfall einer Druckversorgungseinrichtung und/oder einer Steuer- und Regeleinrichtung einer Druckversorgung in einer Radbremse über das Öffnen eines Auslassventils in den Vorratsbehälter, insbesondere im erweiterten Multiplexbetrieb, sog. MUX 2.0-Verfahren, bei dem eine Druckversorgungseinrichtung für alle Radbremsen die Druckregelung übernimmt, erfolgt.

In einer weiteren sehr vorteilhaften Ausgestaltung der vorbeschriebenen Bremssysteme ist mindestens eine Radbremse, vorzugsweise zwei Radbremsen, eine hydraulisch unterstützte elektromechanische Bremse (H-EMB), eine elektrische Parkbremse (EPB) oder eine elektromechanische Bremse (EMB). Gleichsam kann neben einer herkömmlichen hydraulischen Radbremse ein Elektromotor einer zusätzliche Parkbremse oder einer hydraulisch unterstützten Bremse oder elektromechanischen Bremse auf das Rad abbremsend einwirken. Durch diese Maßnahme wird eine weitere Redundanz geschaffen. Bei dem Vorsehen einer hydraulisch unterstützten elektromechanischen Bremse kann vorteilhaft mit dieser sowohl hydraulisch als auch elektromechanisch eine Bremskraft aufgebaut werden.

Beim Vorsehen mindestens eines elektrischen Antriebs- bzw. Traktionsmotors für mindestens eine Achse oder Rad des Fahrzeugs kann dieser vorteilhaft für das Abbremsen einer Achse oder eines Rades mit genutzt werden. Hierdurch ist eine weitere Redundanz gegeben. So kann im Regelbetrieb oder bei Ausfall einer Komponente des Bremssystems, z.B. der Druckversorgungseinrichtung, auch noch eine (unterstützende) Bremskraft mittels des bzw. der Traktionsmotors(-en) erzeugt werden. Durch einen kombinierten Einsatz von Druckversorgungseinrichtung, hydraulisch unterstützter elektromechanischen Bremse(n) H-EMB, elektrischer(n) Parkbremse(n) EPB und/oder elektromechanischere(n) Bremse(n) EMB und/oder einem oder mehrerer Antriebsmotor(en) kann vorteilhaft im Regelbetrieb oder bei Ausfall einer oder mehrerer Komponenten des Bremssystem ein schnellerer Bremskraftanstieg mit kürzerer Time to Lock (TTL) erfolgen bzw. ein höheres Bremsmoment erzeugt werden.

Vorteilhaft kann bei den vorbeschriebenen Bremssystemen der Druckversorgungseinrichtung ein Trennventil am Ausgang der Druckversorgung vorgeschaltet sein, wobei durch Verschließen des Trennventils die Druckversorgungseinrichtung, insbesondere bei deren Ausfall, von dem bzw. den Bremskreis(en) abtrennbar ist.

Um das erfindungsgemäße Bremssystem noch sicherer gegen Ausfall zu machen, kann mindestens eine Steuer- und Regeleinrichtung einer Druckversorgungseinrichtung und deren Ventilanordnung eine separate Spannungsversorgung und/oder Signalübertragung aufweisen, insbesondere alle Module der Druckversorgungseinrichtung, durch mindestens zwei Bordnetze versorgt werden und/oder redundante Signalübertragungen aufweisen. Unter zwei Bordnetzen wird verstanden, dass entweder unterschiedliche Spannungsebenen und/oder Spannungsquellen zur Versorgung des Bremssystems dienen.

Es ist ferner von Vorteil, wenn bei den vorgenannten möglichen Ausführungsformen des erfindungsgemäßen Bremssystems entweder die Druckregelung in einem Bremskreis unter Verwendung mindestens eines Drucksensors und/oder über die Strommessung des Motorstroms des Antriebes und Wegsteuerung des Kolbens der Druckversorgungseinrichtung erfolgt, welche durch Berücksichtigung der Temperatur des Antriebes weiter in der Druckregelgüte verfeinert werden kann. Hierdurch ist eine präzise Druckregelung auch ohne Drucksensor möglich, wie sie bereits in DE 10 2005 055 751 B4 des Anmelders in Funktion ohne Temperatursensor ausführlich erläutert ist.

Ebenso von Vorteil ist, wenn die Kolben-Zylinder-Einheiten des Bremssystems redundante Dichtungen und hydraulische Diagnoseleitungen aufweisen und zudem redundante Regel- und Steuereinheiten vorgesehen sind, und dass die Antriebe der Druckversorgungseinrichtungen 2x3 Phasen aufweisen, und dass mittels Sensoren der Motorphasenstrom $i_{phase}$, der Motorwinkel $\alpha$, insbesondere die Temperatur T, gemessen und bei der Druckregelung berücksichtigt wird, und dass eine redundante Versorgung über zwei Bordnetze bzw. Spannungsniveaus gegeben ist, und dass eine redundante Signalübertragung vorgesehen ist. Durch das Vorsehen all dieser Maßnahmen ergibt sich vorteilhaft ein sehr sicheres System für die Stufe 3 und 4.

Vorteilhaft können die vorbeschriebenen Bremssysteme derart betrieben werden, dass mindestens achsweise, vorzugsweise radindividuell, die Verzögerung der Räder mittels der Druckversorgungseinrichtung, dem bzw. den elektrischen Antriebsmotor(en) und der hydraulisch unterstützten elektromechanischen Bremse (H-EMB) bzw. der elektromechanischen Bremse (EMB), erfolgt. Auch kann Torque-Vectoring mittels der Druckversorgungseinrichtung(-en), dem bzw. den elektrischen Antriebsmotor(en) (TM) und der hydraulisch unterstützten elektromechanischen Bremse (H-EMB) bzw. der elektromechanischen Bremse (EMB), vorgenommen werden.

Bei Verwendung eines Temperatursensors kann zudem die Temperatur des Antriebes der Druckversorgungseinrichtung(en) ermittelt werden und die Temperatur zur genaueren Ermittlung der Drehmomentenkonstante verwendet werden, welche sich durch Temperaturanstieg linear um den Faktor (1-Br%*ΔT) linear verringert. Damit kann eine noch genauere Regelung des Drehmoments und damit des Drucks vorgenommen werden sofern diese auf Basis des Phasenstroms i erfolgt, da der Zusammenhang Drehmoment = kt(T) * Phasenstrom i gilt.

Zur Druckregelung kann neben der Stromregelung auch die Kolbenposition und die Druckvolumenkennlinie herangezogen werden und die Veränderung der Druckvolumenkennlinie bei z.B. Lufteinschluss, durch den Drucksensor oder die H-EMB angepasst werden. Durch den kombinierten Einsatz beider zuvor beschriebenen Verfahren ergibt sich eine hochpräzise Druckregelung, die auch ohne Drucksensor möglich ist. Dieses Verfahren liefert weitere Redundanz bei Ausfall von Druckgebern oder kann auch zur Vereinfachung des Systems mit geringen Redundanzanforderungen (z.B. System mit nur einem oder ohne Druckgeber), eingesetzt werden.

Das erfindungsgemäße Bremssystem kann zudem zur Lenkung/Torque Vektoring verwendet werden, wobei die radindividuellen Regelmöglichkeiten mit der mindestens eine Druckversorgung sowie die hydraulisch unterstützte elektromechanische(n) Bremse(n) H-EMB, elektrische(n) Parkbremse(n) EPB und/oder elektromechanische(n) Bremse(n) EMB und/oder Antriebsmotoren oder der Lenkung EPS verwendet werden können.

Die Erfindung zeichnet sich somit durch einen sehr einfachen Aufbau mit sehr hoher Verfügbarkeit, d.h. bei Komplett bzw. Teilausfall von Modulen wird die Funktion nicht bzw. in sehr geringem Umfang eingeschränkt. Auch bei Ausfall diverser Komponenten kann immer annähernd max. Verzögerung sowie Fahrstabilität sichergestellt werden. Dazu ist auch bei Ausfall einer Druckversorgungseinrichtung eine Verzögerung bis annähernd 0,9g, und eine achsweise Regelung, vorzugsweise radindividuelle Regelung mit Lenkeingriff/Stabilitätseingriff gewährleistet. Eine hohe Verfügbarkeit und Performance wird somit - noch einmal zusammenfassend - durch folgende Maßnahmen erreicht, die einzeln oder in Kombination vorgesehen werden können:

- vornehmlicher Betrieb im geschlossen Bremskreis (>90% der Betriebszeit) sowohl im Bremskraftverstärker (e-BKV), Rekuperationsbetrieb als auch vorwiegend im ABS-Regelbetrieb, damit werden schlafende Fehler vermieden. Wird das System offen betrieben, z.B. ist im ABS durch Öffnung eines Auslassventils der Radkreis mit dem Vorratsbehälter hydraulisch verbunden, sind unerkannte Undichtigkeiten bei Ventilen und Dichtungen (schlafende Fehler) besonders schwer zu erkennen. Daher ist der Betriebszustand zu vermeiden bzw. eine Diagnose der Dichtigkeit nach jedem ABS-Betrieb sinnvoll; eine Diagnose kann derart erfolgen, dass z.B. im Stillstand der Kolben der Druckversorgung bei geschlossenen Ventilen bewegt wird und ein Volumenverlust oder Druckanstieg ermittelt und ausgewertet wird.

- Redundanzen und Teilredundanzen der DV-Motorelektronik: z.B. Ausführung des Motors der DV als 2 x 3 Phasenmotor sowie Teilredundanz der Motoransteuerung. Damit kann bei Ausfall einer Teilelektronik (Wicklungskurzschluss, Ausfall eines 3-Phasenstranges der Motor noch mit halbem Drehmoment betrieben werden. Bei einer Auslegung auf 200 bar kann dann auch bei Ausfall noch 100 bar, d.h. näherungsweise der Blockierdruck erreicht werden. Damit ist auch bei Ausfall einer Elektronik noch ein ABS-Betrieb mit maximaler Leistung bei Niedrigreibwerten und zufriedenstellender Leistung bei Straßenzuständen mit hohem Reibwert möglich;

- Teilredundanzen der Elektronik für die Ventilansteuerung. Fällt die Elektronik aus, ist es für die Verfügbarkeit sehr vorteilhaft, wenn die Schaltventile noch betätigt werden können. Somit ist in der Elektronik eine Redundanz für die Ventilansteuerung vorzusehen, damit die Ventilbetätigung noch funktioniert bei Ausfall der Motorsteuerung;

- Betrieb im geschlossenen MUX-Betrieb mit Schaltventilen und Einsatz von Auslassventilen (mindestens 1 AV je Achse) im Fehlerfall, d.h. Ausfall oder Teilausfall einer Druckversorgung. Damit kann mit geringer Motorleistung die Druckregeldynamik noch aufrechterhalten werden, da der Druck sowohl durch die Druckversorgung sequentiell oder simultan auf- und abgebaut werden kann, sondern auch ein Druckabbau über Auslassventile erfolgen kann;

- Einsatz einer H-EMB, EMB oder EPB im Bremsbetrieb, insbesondere Einsatz EPB oder H-EMB beim Ausfall von Modulen. Damit kann zum einem eine Radbremsung über den hydraulischen Zugang sowie über den in der H-EMB verbauten Elektromotor erfolgen. Der Elektromotor kann als EC-Motor oder Bürstenmotor ausgeführt werden. Somit kann eine Bremskraftunterstützung durch den Elektromotor am jeweiligen Rad erfolgen;

- Nutzung der eingesetzten Traktionsmotoren zur Steigerung des Bremsmomentes bei gleichzeitiger Rekuperation von kinetischer Fahrzeugenergie. Aufgrund der hohen Trägheitsmassen des Antriebsmotor ist jedoch zu berücksichtigen, dass ein Bremsmoment über den Traktionsmotor weniger dynamisch aufgebaut werden kann als über die Druckversorgung und die H-EMB, EPB oder EMB;

- Einsatz einer fehlersicheren und diagnosefähigen Betätigungseinheit mit Pedalgefühlsimulator, redundanten Wegsensoren und einem Kraft-WegSensor (KWS) sowie einer speziellen Schaltung zur Diagnose des Pedalgefühlsimulators;

- Einsatz von Ventilen mit Selbstöffnungsmechanismus durch Druckbeaufschlagung durch den in der Radbremse eingeschlossenen Druck, insbesondere im stromlosen Zustand;

- Nutzung einer hydraulischen Rückfallebene in einem Bremskreis bzw. einer Achse über Verbindung der Betätigungseinheit über ein Schaltventil FV;

- Nachfördern von Volumen der DV bei Erreichen der Volumengrenze;

- Betrieb der Druckstellung ohne Druckgeber durch intelligente genaue Drehmomentschätzung aus dem Phasenstrom unter Einbeziehung der Motortemperatur und der Druckvolumenkennlinie, die über einen Druckgeber oder die H-EMB-Funktion abgeglichen wird;

- Umschalten von Normalbetrieb 2 Radbetrieb im MUX-Verfahren auf 4-Radbetrieb im MUX 2.0 Verfahren mit AV bei Ausfall einer DV

- Einsatz von Trapezspindel (kein Blockieren der Spindel durch Schmutzpartikel in der Laufbahn des Kugel-Gewinde-Triebes);

- Selbsthemmende Trapezspindel -> Verzicht auf FV und TV.

In der Tabelle 1 sind die verschiedenen Radregelfunktionen für den Normalbetreib (Regelbetrieb) und vier verschiedene Fehlerfälle Fehler 1 bis Fehler 4 aufgeführt.

Der Normalbetrieb ist in der ersten Zeile dargestellt und erläutert. Die Druckversorgungseinrichtung DV erzeugt die maximal erforderliche Regelleistung. Die Auslassventile AV werden für 90-99% der Regelzeit nicht genutzt und nur bei extremen Situationen zum schnellen Druckabbau in den Vorratsbehälter geöffnet. Pedalgefühl ist konstant, da komplett entkoppelter Brake-by-Wire Betrieb. Mittels der elektrischen Antriebsmotoren TM1 und TM2 wird Energie rekuperiert und der Druckverlauf der Druckversorgung an den zeitlichen Drehmomentverlauf der Antriebsmotoren derart angepasst, das kein Unterschied vom Fahrer nicht feststellbar ist, ob alleine das elektrohydraulische Bremssystem oder zusammen mit Rekuperationsbetrieb im Einsatz ist.

Bei Fehler F1, bei dem ein Ausfall von einem 3-Phasen-System des Antriebes der Druckversorgungseinrichtung DV vorliegt, kann die Druckversorgungseinrichtung über das zweite 3-Phasen-System noch immer einen Bremsdruck aufbauen und den ABS-Regelbetrieb beherrschen. Die AV-Ventile können hier verstärkt zur Druckabbauregelung eingesetzt werden, um spürbare Leistungseinbussen in der ABS-Regelung zu vermeiden. Elektrische Antriebsmotoren werden zur Bremsmomentsteigerung eingesetzt, weil die Druckversorgung nur noch den halben Druck als im Normalzustand liefern kann. Bei starken E-Motoren kann damit der Radblockierdruck sicher erreicht werden.

Bei Fehler F2 ist keine Druckversorgung mittels der Druckversorgungseinrichtung DV mehr möglich. In diesem Fall wird zur Verzögerung des Fahrzeugs die Betätigungseinrichtung genutzt, mittels derer ein Bremsdruck für die Radbremsen aufbaubar ist. Zusätzlich können die Traktionsmotoren zum Bremsen des Fahrzeuges genutzt werden. Auch die hydraulisch unterstützt elektromechanischen Bremsen H-EMB bzw. die rein elektromechanischen Bremsen EMB können eine Bremskraft zur Verzögerung des Fahrzeuges liefern.

Bei Fehler 3 ist lediglich der Drucksensor DG ausgefallen, wobei dann noch immer über den gemessenen Motorstrom der Druckversorgungseinrichtung und Wegsteuerung mittels der Druck-Volumen-Kennlinie eine Druckregelung möglich ist, die durch Temperaturmessung weiter verbessert werden kann. Auch die Diagnosefunktionen können bei diesem Fehlerfall weiter ausgeführt werden.

Bei Fehler 4 kommt es durch Umwelteinflüsse (z.B. Luftblasen) und Verschleiß zu einem Nachförderbedarf an Bremsflüssigkeit in die Bremskreise, was jederzeit problemlos mittels der Druckversorgungseinrichtung durchgeführt werden kann und sich nicht auf das Pedalgefühl auswirkt.

In Tabelle 2 sind für die Bremse bzw. verschiedenen fahrdynamischen Regelfunktionen (elektrische Bremskraftverstärkung e-BKV, ABS-Betrieb, Lenkung/Torque Vektoring, Stabilitätsregelung/ESP, Rekuperation und Parkbremse) die durch die Komponenten Druckversorgung DV1, Antriebsmotor TM1, TM2, Lenkung EPS und hydraulische unterstützte H-EMB bzw. Parkbremse EPB abgebildet werden können. Dabei ist die primäre Funktion sowie die Sekundärfunktion/Redundanz gekennzeichnet. Hiermit wird verdeutlicht, dass die wichtigsten Fahrdynamikfunktionen bei der Erfindung mindestens 2-fach redundant vorhanden sind und das System sich somit für Stufe 3 (HAD) und sogar Stufe 4 (FAD) eignet.

Das Bremssystem kann auch derart vereinfacht werden, dass ein sehr kostengünstiges System mit geringeren Redundanzanforderungen und sinnvoller Kombination der primären Versorgungseinrichtung mit den Bremsaggregate, z.B. für BRIC-Staaten wie Indien, Brasilien, China aus dem System abgeleitet wird. Hier wird auf die Redundanz der Druckversorgereinrichtung mit redundanten ECU bsp. 2x3 Phasen verzichtet und es wird die hydraulische Rückfallebene über Druckerzeugung des Fahrers über die Betätigungseinheit sowie eine Verzögerung durch den Elektromotor TM genutzt. Damit sind auch mit einer einfachen Betätigungseinheit mit einem Kolben (HZ) die aktuell gesetzlichen Vorschriften der Bremsverzögerung bis 0,3-0,5g für autonomes Fahren der Stufen 1 bis 2 erreichbar. Zudem kann beispielsweise auf den Druckgeber verzichtet und ausschließlich nach dem PPC-Verfahren geregelt werden. Damit können die Fehlerfälle F1 und F3 nicht mehr auftreten. Eine elektrische Parkierbremse kann ebenfalls entfallen, wenn eine H-EMB eingesetzt wird, beziehungsweise eine hydraulisch unterstützte Parkbremse gemäß DE 10 2007 015809 eingesetzt wird und der Druck in der Parkbremse mit einem Magnetventil eingesperrt wird. Bei Ausfall der Hydraulikleitung bzw. Leckage kann dann nachgefördert werden oder über den Traktionsmotor noch ein Haltemoment erzeugt werden.

Auch ein Wegfall der Betätigungseinheit ist denkbar, wenn die Druckversorgung derart zuverlässig produziert wird, dass ein Kolbendichtungsausfall und ein Blockieren des Kugel-Gewindetriebes mit ausreichenden FIT-Raten ausgeschlossen werden kann.

Die erfindungsgemäße Druckversorgungseinrichtung kann auch von einer Rotationspumpe angetrieben sein, welche insbesondere eine Zahnradpumpe sein kann. Sie kann dann ein Motorgehäuse mit darin angeordnetem elektromotorischem Antrieb aufweisen, welcher die Zahnradpumpe antreibt. Der Antrieb hat dafür einen Stator und einen Rotor. Über den Rotor des Antriebs wird ein inneres Zahnrad der Zahnradpumpe bewegt. Der Antrieb ist dabei erfindungsgemäß mittels mindestens einer Dichtung, welche zwischen Rotor und innerem Zahnrad angeordnet ist, als Trockenläufer ausgebildet bzw. weist einen trockenlaufenden Rotor auf, d.h. der Rotor des Antriebs wird nicht von dem von der Zahnradpumpe gefördertem Medium umströmt und/oder ist nicht von dem Medium umgeben. Durch die Ausbildung als Trockenläufer dreht der Rotor ohne größere Reibungs- und Strömungswiderstände, wodurch höhere Drehzahlen und ein besserer Wirkungsgrad erzielbar ist.

Eine besonders kompakte und einfache Druckversorgungseinrichtung ergibt sich, wenn das Motorgehäuse eine Seitenwandung aufweist, an der die Zahnradpumpe angeordnet ist, insbesondere diese eine Ausnehmung aufweist, in der die Zahnradpumpe zumindest teilweise oder ganz einliegt. Die Seitenwandung des Motorgehäuses kann dabei von einer mit dem Rotor drehfest verbundenen Welle durchgriffen sein, wobei das Zahnrad entweder drehfest mit der Welle verbunden ist oder über ein zwischengeschaltetes Getriebe und/oder einer Kupplung mit der Welle gekoppelt ist.

Eine vorteilhafte kompakte und integrierte Ausbildung der zuvor beschriebenen Druckversorgungseinrichtung erhält man, wenn der Anrieb mit seinem Gehäuse an einem Hydraulikgehäuse mit mindestens einem darin angeordneten Ventil und/oder Hydraulikleitungen bzw. -kanälen anliegt oder mit diesem eine Einheit bildet. Die Seitenwandung des Antriebsgehäuses kann dabei an der Seitenwandung des Hydraulikgehäuses anliegen bzw. anstoßen, insbesondere an dieser befestigt sein, wobei die, insbesondere topfförmige, Ausnehmung die Zahnradpumpe zumindest teilweise oder ganz aufnimmt und hin zum Hydraulikgehäuse geöffnet ist. Bei aneinander angeordneten Gehäusen kann die Zahnradpumpe entweder ganz in der Ausnehmung der Wandung des Antriebsgehäuses, ganz in einer Ausnehmung des Hydraulikgehäuses oder aber sowohl in einer Ausnehmung der Seitenwandung des Antriebsgehäuses als auch in einer Ausnehmung der Seitenwandung des Hydraulikgehäuses einliegen. Im letzteren Fall sind die Öffnungen der beiden Ausnehmungen dann zueinander zugewandt. Zusätzliche Dichtungen können dabei vorgesehen sein, um die beiden Gehäuse zueinander und nach außen hin abzudichten.

Die vorbeschriebene Ausnehmung in der Seitenwandung des Antriebsgehäuses ist dabei vorteilhaft nach außen hin, und sofern ein Hydraulikgehäuse vorhanden, zu diesem hin geöffnet. Die Ausnehmung kann selbst vorteilhaft topfförmig ausgebildet sein. Auch kann sie einen zylindrischen im Querschnitt kreisförmigen Abschnitt aufweisen, in dem die Zahnradpumpe mit ihren Zahnrädern einliegt.

Die Seitenwandung des Antriebsgehäuses kann zudem vorteilhaft als Flansch ausgebildet sein, mit dem der Antrieb an einem anderen Teil oder Aggregat befestigbar ist.

Die bei der erfindungsgemäßen Druckversorgungseinrichtung eingesetzte Zahnradpumpe kann eine Innenzahnradpumpe mit Sichel, eine Außenzahnradpumpe oder Zahnringpumpe sein.

Die Zahnradpumpe kann zudem vorteilhaft axial neben dem Stator und/oder dem Rotor des Antriebs angeordnet sein, ist deren Aufbau und Größe nicht durch die Zahnradpumpe nachteilig beschränkt. Auch ist die Zahnradpumpe dann in ihrer Größe und ihrem Aufbau nicht abhängig von den Abmessungen des Stators und des Rotors.

Das Antriebsgehäuse kann mindestens zweiteilig ausgebildet sein, wobei die Seitenwandung Teil eines ersten Gehäuseteils ist oder dieses bildet. Das zweite Gehäuseteil kann z.B. topfförmig ausgebildet sein und den Stator und den Rotor des Antriebs aufnehmen.

Der Rotor ist, wie bereits ausgeführt, mit dem Zahnrad mittels einer Antriebswelle direkt oder über ein Getriebe und/oder eine Kupplung verbunden. Dabei kann das Zahnrad entweder mittels einer kraftschlüssigen Verbindung oder mittels eines Formschlusses, welcher insbesondere mittels eines Stifts oder Kerbverzahnung gebildet ist, mit der Antriebswelle drehfest verbunden sein. Bei der Zahnringpumpe ist das innere Zahnrad exzentrisch auf einem mit der Antriebswelle verbundenem Teil, insbesondere in Form einer Scheibe oder einer Nockenscheibe, angeordnet.

Sowohl bei der Ausbildung der Zahnradpumpe der erfindungsgemäßen Druckversorgungseinrichtung als Innenzahnradpumpe oder als Zahnringpumpe, ist zu dem inneren Zahnrad auch noch ein äußerer Innenzahnkranz notwendig. Der Innenzahnkranz wird bei der Innenzahnradpumpe mittels des von der Antriebswelle angetriebenen inneren Zahnrades um seine Drehachse verdreht, wobei das innere Zahnrad exzentrisch zu dem Innenzahnkranz angeordnet ist. Der Innenzahnkranz dreht sich dabei in einem äußeren, ihn umgebenden Ring oder Zylinder. Zusätzlich ist noch eine Sichel vorzusehen, welche in dem sich durch die Exzentrizität ergebenden Raum zwischen Innenzahnkranz und innerem Zahnrad angeordnet sein muss.

Im Gegensatz zur Innenzahnradpumpe ist bei der Zahnringpumpe der Innenzahnkranz fest angeordnet, wobei das innere Zahnrad aufgrund seiner exzentrischen Lagerung auf der von der Antriebswelle gedrehten Scheibe in dem Innenzahnkranz abrollt. Eine Sichel wie bei der Innenzahnradpumpe ist nicht erforderlich.

Die Antriebswelle kann erfindungsgemäß entweder

    a) im Motorgehäuse einerseits, sowie in der Zahnradpumpe und/oder im Hydraulikgehäuse andererseits oder

    b) nur in der Zahnradpumpe oder

    c) im Hydraulikgehäuse und im Motorgehäuse oder

    d) in der Zahnradpumpe und im Hydraulikgehäuse

abgestützt bzw. mittels geeigneter Lager, insbesondere Radiallager, in Form von Kugel- oder Rollenlagern, und/oder Axiallagern, gelagert sein.

Sofern ein Hydraulikgehäuse vorgesehen ist, so kann sich die Antriebswelle bis in das Hydraulikgehäuse hinein erstrecken, insbesondere bis zu dessen dem Antrieb gegenüberliegender Seite. So kann an der Antriebswelle ein Target für einen Sensor angeordnet sein, wobei der Sensor in der Steuer- und Regeleinheit (ECU) angeordnet ist. Dabei können zusätzliche Dichtungen verhindern, dass das geförderte Medium in die Steuer- und Regeleinheit gelangt. Es ist auch möglich, dass sich die Antriebswelle durch das Hydraulikgehäuse ganz hindurch erstreckt und in dem sich daran anschließenden Gehäuse, z.B. einer Steuer- und Regeleinheit, endet.

Die Zahnradpumpe als Innenzahnradpumpe kann unterschiedlich ausgebildet sein. So können in einer ersten Ausführung das innere Zahnrad, der Innenzahnkranz, die Sichel und der Außenring zwischen zwei Scheiben angeordnet sein, wobei nach entsprechender Zentrierung und Justierung der Teile zueinander die Scheiben mit dem Außenring stoffschlüssig verbunden werden. Dabei kann sich die stoffschlüssige Verbindung ganz um den Umfang herum erstrecken, so dass sich eine stabile und kompakte Ausführungsform ergibt, bei der die einzelnen sich bewegenden Teile nur kleine Spiele und Spalte zueinander aufweisen, wodurch ein guter Wirkungsgrad erreicht wird und ein hoher Druck erzielbar ist.

Nachfolgend werden mögliche Ausführungsformen des erfindungsgemäßen Bremssystems anhand von Zeichnungen näher erläutert.

Es zeigen:

Fig. 1: Eine schematische Darstellung einer ersten Ausführungsform des erfinderischen Bremssystems mit einer elektrischen Parkbremse an der Hinterachse, elektrische Antriebsmotoren TM1 und TM2 an Vorder- und Hinterachse sowie eine Druckversorgungseinrichtung mit Magnetventilen, Regel- und Steuereinrichtungen in einer Druckregelmodul-Baueinheit, wobei die Baueinheit mit 4 Radbremsen und einer Betätigungseinheit (BE) hydraulisch verbunden ist,

Fig. 1a: Prinzipschaltbild einer ersten möglichen Ausgestaltung des Bremssystems gemäß Figur 1;

Fig. 2: eine schematische Darstellung einer zweiten möglichen Ausführungsform des erfinderischen Bremssystems mit dem Unterschied zum Bremssystem gemäß Figur 1, dass an der Hinterachse hydraulisch unterstützte elektromechanische Bremsen angeordnet sind;

Fig. 2a: Prinzipschaltbild des Bremssystems gemäß Figur 2;

Fig. 3: eine schematische Darstellung einer dritten möglichen Ausführungsform des erfinderischen Bremssystems mit einer Druckversorgungseinrichtung für die Vorderachse, wobei an der Hinterachse pro Rad eine elektromechanische Bremse vorgesehen ist;

Fig. 3a: Prinzipschaltbild des Bremssystems gemäß Figur 3;

Fig. 4a: Querschnittsdarstellung durch eine hydraulisch unterstützte elektromechanische Bremse;

Fig. 4b: Prinzipschaltbild möglicher Ventilschaltungen und deren Funktion zum Druckabbau in einer Radbremse;

Fig. 4c: Betätigungseinrichtung mit zugehöriger Kolben-Zylinder-Einheit zum Druckaufbau in einem Bremskreis;

Fig. 5: Druckversorgungseinrichtung mit zwei Steuer- und Regeleinrichtungen;

Fig. 6a: Momentendiagramme zur Darstellung der Bremskraftunterstützung mittels hydraulisch unterstützter elektromechanischer Bremse und Traktionsmotor;

Fig. 6b: Momentendiagramme zur Darstellung der Downsizing-Möglichkeit der Druckversorgungseinrichtung, sofern eine Bremskraftunterstützung mittels hydraulisch unterstützter elektromechanischer Bremse und Traktionsmotor erfolgt;

Fig. 6c: Momentendiagramme zur Darstellung der Bremskraftunterstützung mittels hydraulisch unterstützter elektromechanischer Bremse und Traktionsmotor im Notbetrieb bei Ausfall von Komponenten des Bremssystems;

Fig. 6d: Momentendiagramme zur Darstellung des Bremsmomentenverlaufs während des Nachforderns von Bremsfluid mit der Bremskraftunterstützung mittels hydraulisch unterstützter elektromechanischer Bremse und Traktionsmotor;

Fig. 6e: Bremsdruckregelung bei Ausfall des Druckgebers mittels Strommessung und Auswertung der Druck-Volumen-Kennlinie;

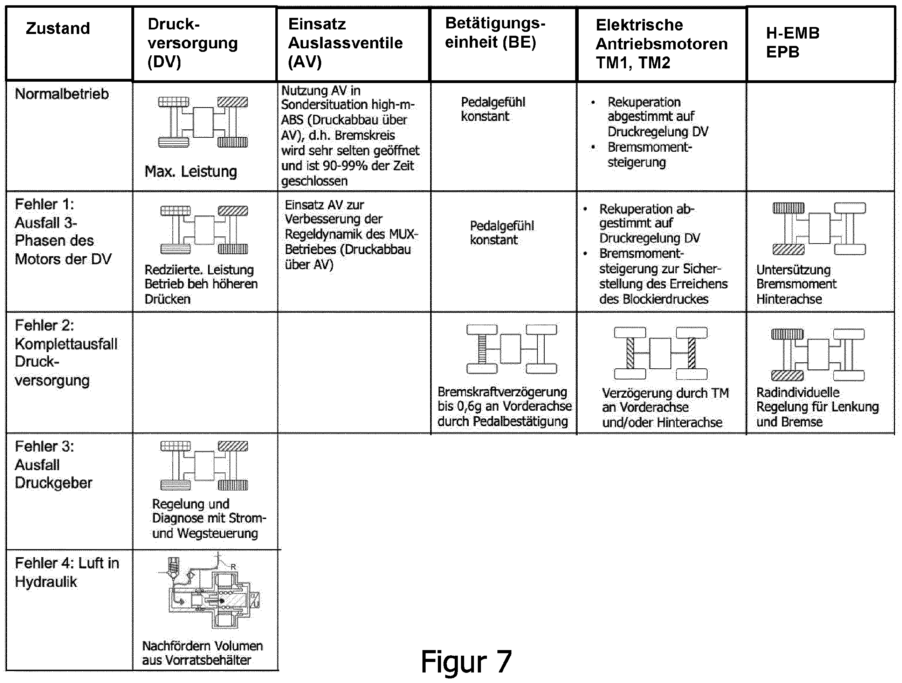

Fig. 7: Tabelle 1: Auswirkung von wichtigen Fehlern auf die Betriebsstrategie;

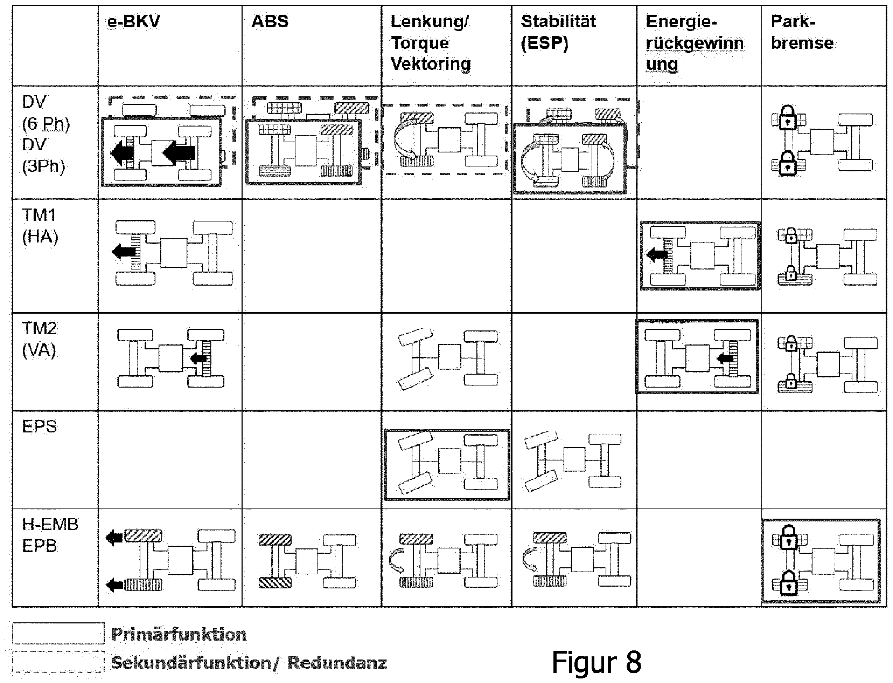

Fig. 8: Tabelle 2: Primärfunktion und Sekundärfunktion/ Redundanz;

Fig. 9a: Baueinheit bestehend aus Elektromotor 22, einkreisiger Rotationspumpe Z, HCU mit Magnetventilen und ECU

Fig. 9b: Baueinheit bestehend aus Elektromotor 22, zweikreisiger Rotationspumpe Z, HCU mit Magnetventilen und ECU

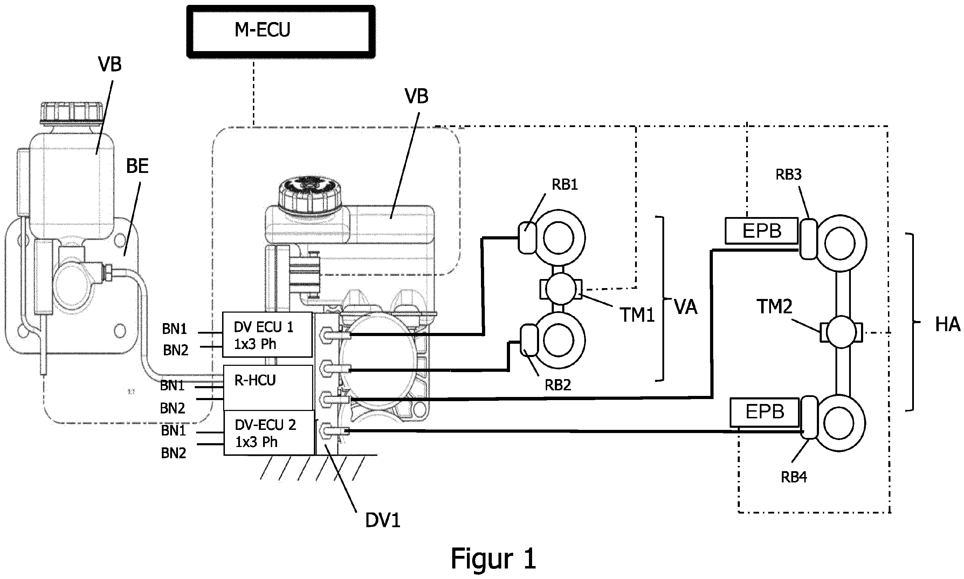

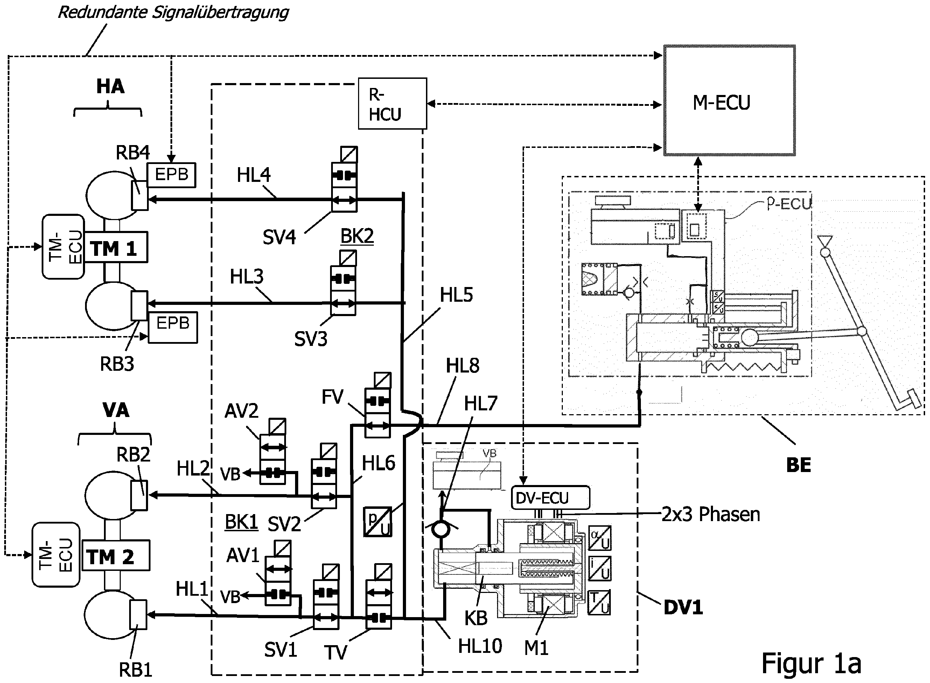

Die Figur 1 zeigt eine erste mögliche Ausführungsform des erfindungsgemäßen Bremssystems mit einer Druckversorgungseinrichtung DV1, einer Betätigungseinrichtung BE, einer übergeordneten Steuer- und Regeleinheit M-ECU, sowie zwei an der Vorderachse VA angeordneten Radbremsen RB1 und RB2, sowie einer Hinterachse HA an der ebenfalls zwei Radbremsen RB3 und RB4 sowie zusätzlich elektrische Parkbremsen EPB angeordnet sind. Sowohl an der Vorder- als auch der Hinterachse ist jeweils ein Traktionsmotor TM1 und TM2 angeordnet. Die Druckversorgungseinrichtung DV1 verfügt über zwei voneinander unabhängige Steuer- und Regeleinheiten DV-ECU1 und DV-ECU2, die jeweils die Ansteuerung von jeweils einem der beiden Wicklungs- bzw. Phasensysteme des Antriebsmotors der Druckversorgungseinrichtung DV1, welche hier durch 3-Phasensysteme gebildet sind, ansteuern. Zusätzlich können redundante Signalleitungen DS1 und DS2 vorgesehen werden.

Die Druckversorgungseinrichtung DV1 verfügt zudem über eine Ventileinrichtung R-HCU in der Schaltventile zum Verbinden bzw. Trennen der Druckversorgungseinrichtung DV1 mit den Radbremsen vorgesehen sind. Die gestrichelten Linien stellen Signalübertragungsleitungen dar, welche die Steuereinheit M-ECU mit den Komponenten des Bremssystems verbinden.

Die Figur 1a zeigt ein Prinzipschaltbild einer ersten möglichen Ausgestaltung des Bremssystems gemäß Figur 1. Das Fahrzeug weist eine Vorderachse VA sowie eine Hinterachse HA auf. An der Vorderachse ist an jedem Rad jeweils eine konventionelle hydraulische Radbremse RB1, RB2 angeordnet. Zusätzlich ist an der Vorderachse VA noch ein Traktionsmotor TM1 zusammen mit seiner Steuereinheit TM-ECU angeordnet, wobei der Traktionsmotor TM1 sowohl zum Antrieb als auch zum Abbremsen der Vorderachse VA eingesetzt werden kann.

An der Hinterachse HA sind an jedem Rad sowohl eine konventionelle hydraulisch wirkende Radbremse RB3, RB4 sowie jeweils eine elektrische Parkbremse EKB angeordnet. Auch an der Hinterachse HA ist ein Traktionsmotor TM2 mit zugehöriger Steuerelektronik TM-ECU angeordnet, welcher ebenfalls wie der Traktionsmotor TM1 an der Vorderachse VA sowohl zum Antrieb als auch zum Abbremsen der Hinterachse HA eingesetzt werden kann.

Zum Druckaufbau in den hydraulisch wirkenden Radbremsen RB1-RB4 dient eine Druckversorgungseinrichtung DV1, die einen elektromotorischen Antrieb M1 aufweist, welcher von der Steuer- und Regeleinrichtung DV-ECU gesteuert wird. Zusätzlich kann die Druckversorgungseinrichtung DV1 noch über ein Motorstrom-Meßeinrichtung i/U, mindestens einen Temperatursensor T/U sowie eine Rotor-Winkelgeber $\alpha$/U aufweisen, deren Signale zur Druckregelung verwendet werden können. Der Motor M1 treibt über einen Spindeltrieb einen Kolben KB, welcher in einem Zylinder der Druckversorgungseinrichtung DV1 verschieblich gelagert ist und einen Druckraum begrenzt, an, um dort einen Druck aufzubauen, zu halten oder abzubauen. Der Druckraum ist über die Hydraulikleitung HL10 mit einem Trennventil TV sowie einer Hydraulikleitung HL5 in Verbindung. Mittels des Druckgebers p/U kann der Druck in der Hydraulikleitung HL5 bzw. HL10 ermittelt werden. Die Druckregelung kann entweder unter Zuhilfenahme des Druckgebers p/U erfolgen. Die Druckregelung kann aber auch über die Strommessung mittels der Motorstrom-Meßeinrichtung i/U sowie dem Winkelgeber $\alpha$/U und einer abgespeicherten Druck-Volumen-Kennlinie erfolgen, da das Motormoment proportional zum Druck im Druckraum und auch proportional zum Motorstrom i ist. Der Motor M1 verfügt über zwei voneinander getrennte Wicklungssysteme mit 2x3-Phasen. Selbstverständlich kann die Zahl der Phasen den jeweiligen Anforderungen nach geändert werden. Bei Ausfall eines Wicklungssystems kann der Motor M1 noch mit verminderter Leistung betrieben werden. Hierdurch ist bereits eine wesentliche Redundanz geschaffen. Die Steuer- und Regeleinrichtung DV-ECU kann ebenfalls redundant ausgebildet werden, so dass z.B. jeweils eine eigenständige Steuer- und Regeleinrichtung DV-ECU1 und DV-ECU2 vorgesehen sein kann, welche jeweils ein Phasensystem des Motors M1 ansteuert. Somit kann auch bei Ausfall einer Steuer- und Regeleinrichtung DV-ECU1 bzw. DV-ECU2 das Bremssystem noch sicher betrieben werden.

Mittels eines Trennventils TV kann die Druckversorgungseinrichtung DV1 wahlweise mit der Hydraulikleitung HL6 bzw. dem ersten Bremskreis BK1 verbunden bzw. von dieser getrennt werden. Mittels Schaltventilen SV1 und SV2 sind die Hydraulikleitungen HL1 und HL2, welche mit den Radbremsen verbunden sind, wahlweise mit der Hydraulikleitung HL6 verbindbar. Soll nun ein Druck in der Radbremse RB1 der Vorderachse VA aufgebaut werden, so erfolgt dies über geöffnete Ventile TV und SV1 wobei die Ventile AV1, SV2 und FV geschlossen sind und der Kolben KB mittels des Motors M1 verstellt wird. Zum Druckabbau in der Radbremse RB1 kann der Kolben KB bei gleicher Ventilschaltung zurückgefahren werden oder aber das Auslassventil AV1 wird geöffnet, wodurch sich der Druck in der Radbremse RB1 in den Vorratsbehälter VB abbauen kann. Der Druckaufbau in der Radbremse RB2 erfolgt analog. Selbstverständlich kann der Druck in den Radbremsen RB1 und RB2 auch simultan aufgebaut und abgebaut werden. Auch ist ein Druckaufbau in der einen Radbremse mittels der Druckversorgungseinrichtung DV1 und gleichzeitig ein Druckabbau in der anderen Radbremse über das zugehörige Auslassventil AV möglich. Bei alleinigem Druckaufbau in den Radbremsen RB3 und RB4 des zweiten Bremskreises BK2 muss entweder das Trennventil TV und/oder die Schaltventile SV1 und SV2 geschlossen und das jeweilige Schaltventil SV3 bzw. SV3 geöffnet sein. Sollte die Druckversorgungseinrichtung DV1 ausfallen, so kann mittels der Betätigungseinrichtung BE ein Druck in einem oder beiden Bremskreisen aufgebaut werden. Hierfür weist die Betätigungseinrichtung BE ein Bremspedal auf, welches auf einen Druckraum begrenzenden Kolben wirkt, wobei durch den Kolben dann aus dem Druckraum Hydraulikmedium in den bzw. die Bremskreise gedrückt wird, wodurch ein Bremsdruck in einer oder allen Radbremsen aufgebaut wird. Hierfür sind die Schaltventile vorzugsweise als Stromlos-Offene-Ventile ausgebildet.

An den Rädern der Hinterachse sind zudem elektromechanische Bremsen EMB angeordnet, mittels derer über deren Antrieb ein Bremsmoment aufbaubar ist, welches unterstützend oder als Ersatz zur Druckregelung verwendet werden kann. Auch kann mittels der Traktionsmotoren TM1 und TM2 ein Bremsmoment auf die Achsen VA und HA aufgebracht werden. Dieses kann ebenfalls unterstützend bei hoher geforderter Dynamik wirken oder als Ersatz oder Ergänzung bei Totalausfall oder Teilausfall der Druckregelung mittels der Druckversorgungseinrichtung DV1. Eine übergeordnete Steuer- und Regeleinrichtung M-ECU steuert dabei die einzelnen Komponentensteuerungen TM-ECU, DV-ECU und R-HCU (Ventilsteuerung)

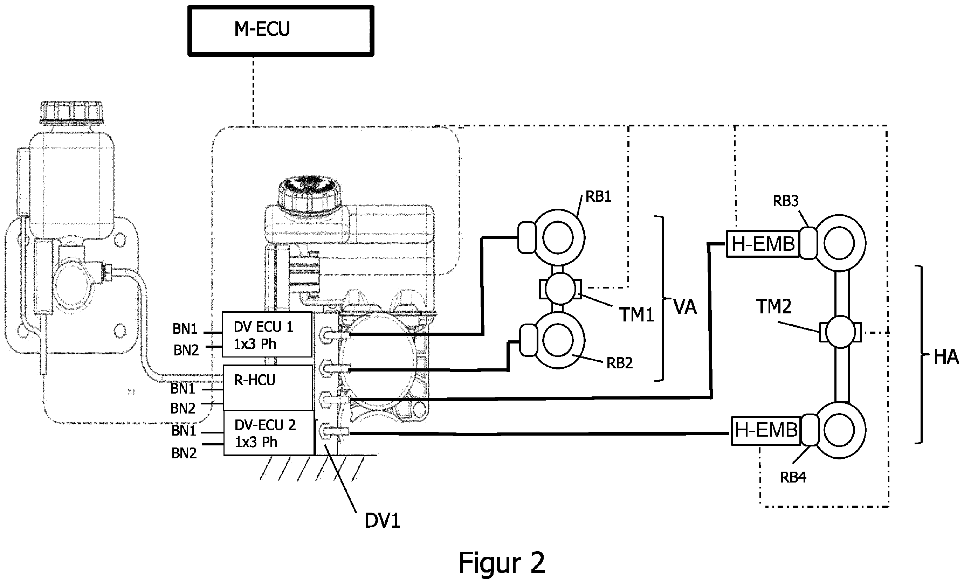

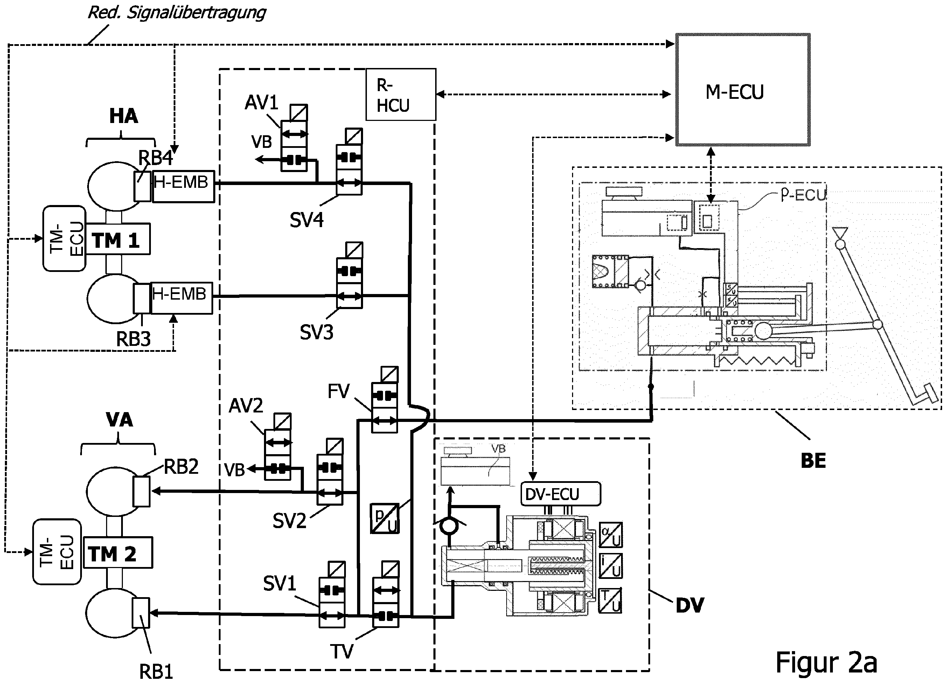

Die Figur 2 zeigt eine schematische Darstellung einer zweiten möglichen Ausführungsform des erfinderischen Bremssystems mit dem Unterschied zum Bremssystem gemäß Figur 1, dass an der Hinterachse anstatt zusätzlicher elektromechanischer Bremsen hydraulisch unterstützte elektromechanische Bremsen angeordnet sind. Sofern die hydraulisch unterstützten elektromechanischen Bremsen H-EMB entsprechend ausgebildet sind, kann auch gegebenenfalls auf den Einsatz der konventionellen Radbremsen RB3 und RB4 verzichtet werden. Der Druck in den hydraulisch unterstützten Bremsen H-EMB wird von der Druckversorgungseinrichtung DV1 eingeregelt.

Die Figur 2a zeigt das Prinzipschaltbild des Bremssystems gemäß Figur 2. Dieses unterscheidet sich nur in wenigen Punkten von dem in Figur 1a. So ist z.B. hier ein Auslassventil AV pro Bremskreis vorgesehen. Ansonsten erfolgt die Regelung und Steuerung des Bremssystems analog zu dem in Figur 1a gezeigten und beschriebenen. Es wird daher insoweit auf die Figur 1a und ihre Beschreibung verwiesen.

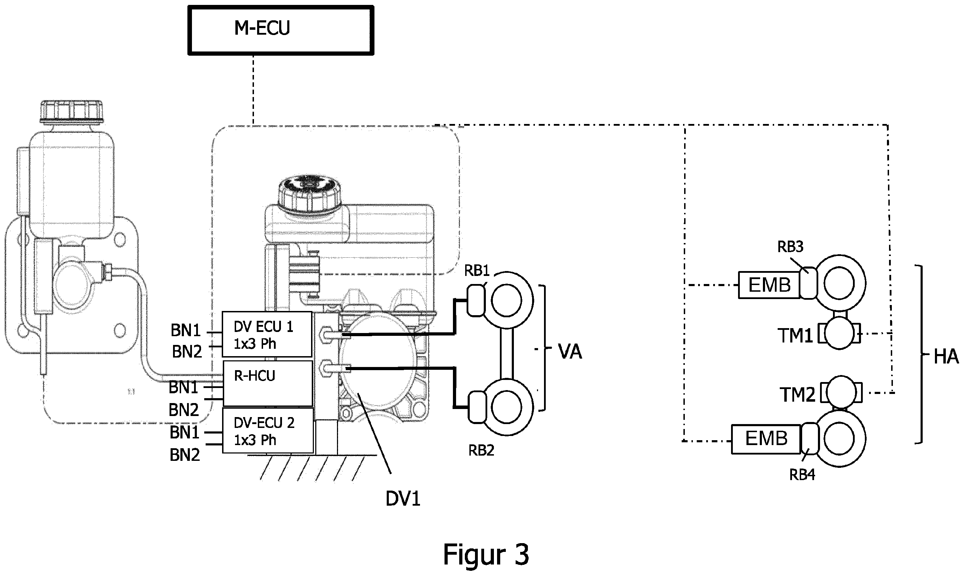

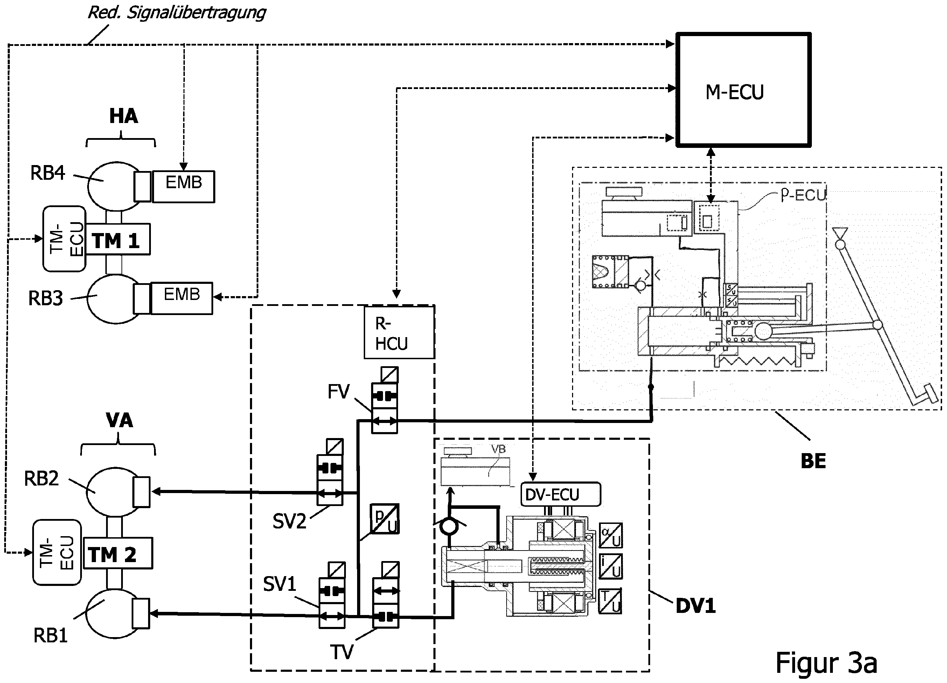

Die Figur 3 zeigt eine schematische Darstellung einer dritten möglichen Ausführungsform des erfinderischen Bremssystems mit einer Druckversorgungseinrichtung DV1 für die Vorderachse VA, wobei an der Hinterachse HA pro Rad jeweils nur eine elektromechanische Bremse EMB als Radbremse RB3 und RB4 vorgesehen ist und jedes Hinterrad über einen eigenen Traktionsmotor TM1, TM2 angetrieben und auch abgebremst werden kann. Auch hier sind wieder zwei getrennte Steuer- und Regeleinrichtungen DV-ECU1 und DV-ECU2 vorgesehen, welche jeweils getrennte Wicklungssysteme (1x3PH) des Antriebsmotors der Druckversorgungseinrichtung DV1 ansteuern. Zusätzlich oder alternativ kann eine redundante Stromversorgung für die Steuer- und Regeleinrichtungen und/oder die Ventilsteuerung R-HCU vorgesehen werden. So können diese wie dargestellt beispielsweise an zwei unterschiedliche Bordnetze BN1 und BN2 angeschlossen sein, so dass bei Ausfall eines Bordnetzes eine Stromversorgung noch über das andere Bordnetz BN sichergestellt ist.

Die Figur 3a zeigt das Prinzipschaltbild des Bremssystems gemäß Figur 3. Bei diesem System kann auf Auslassventile AV verzichtet werden, da der Druckabbau auch schnell über die stromlos-offenen Ventile SV1, SV2 und TV durch den Druckraum der Druckversorgungseinrichtung DV1 hin zum Vorratsbehältnis VB erfolgen kann.

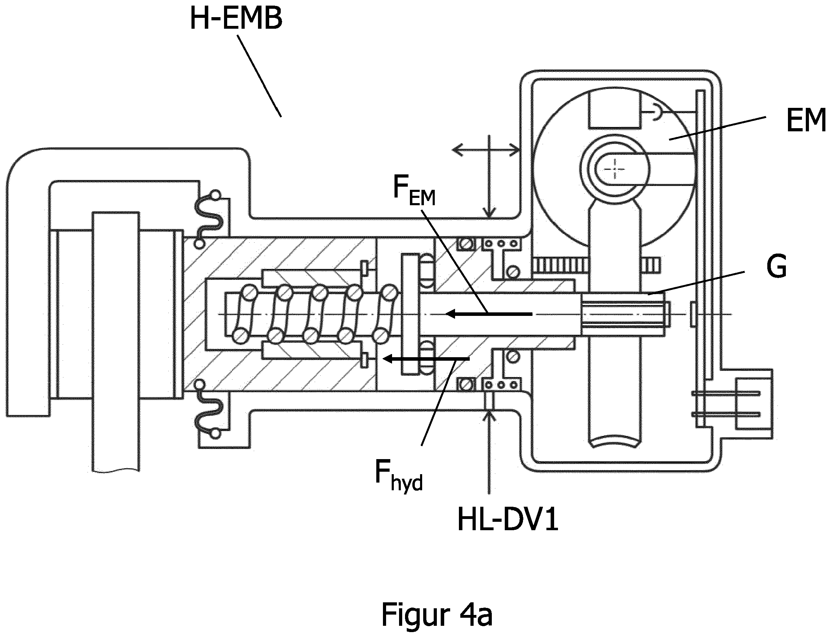

Die Figur 4a zeigt eine Querschnittsdarstellung durch eine hydraulisch unterstützte elektromechanische Bremse H-EMB, welche über einen Hydraulikanschluss HL-DV1 mit der Druckversorgungseinrichtung DV1 verbindbar ist, so dass entweder über die Hydraulik und/oder den Elektromotor EM eine Kraft auf die Bremsscheiben aufbringbar ist. Die rotatorische Bewegung des Elektromotors wird hierbei über ein Getriebe G in eine lineare Bewegung übertragen und erzeugt die Kraft $F_{EM}$ auf die Radbremse. Das Getriebe G ist vorzugsweise selbsthemmend ausgeführt, so dass im Stillstand bei Ausfall des Bordnetzes die Parkbremse sicher funktioniert. Zusätzlich zum Elektromotor wird über die Druckversorgung eine hydraulische Kraft $F_{hyd}$ erzeugt. Je nach Ausführung des EM als Bürstenmotor oder bürstenloser Motor mit geringer oder höherer Leistung, kann die Dynamik der Bremsmomentänderung und das zusätzlich verfügbare Bremsmoment durch die H-EMB durch entsprechende Gestaltung der Komponenten festgelegt werden und auf die hydraulische Bremse abgestimmt werden.

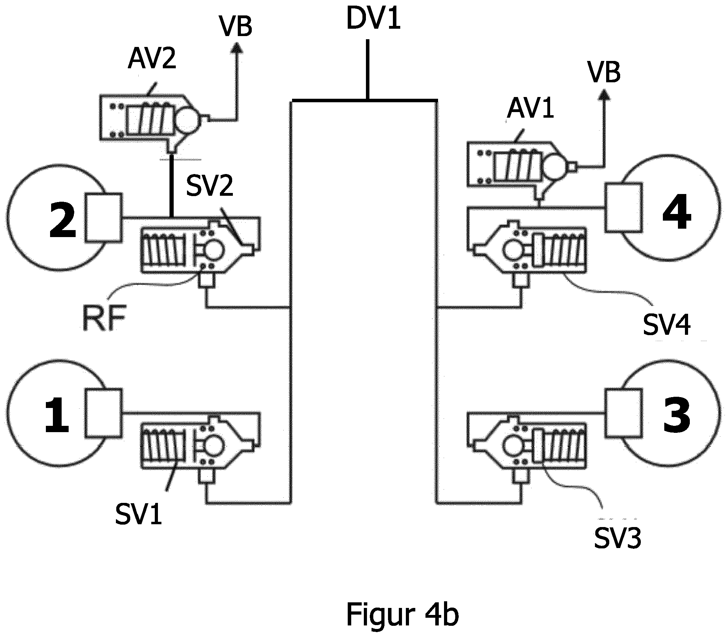

Die Figur 4b zeigt eine mögliche Ventilschaltung und deren Funktion zur Druckregelung in den vier Radbremsen RB1 bis RB4 entsprechend der Ventilschaltung von Figur 2a. Dabei erfolgt der Druckaufbau und Druckabbau in den Radbremsen RB1 und RB3 über die Druckversorgungseinrichtung DV1 bei jeweils geöffneten Schaltventilen SV1 bzw. SV3 mit Druck als Regelgröße vorzugsweise unterstützt mit dem PPC-Verfahren, z.B. durch geeignete Vorsteuerung, bzw. bei Nichtverfügbarkeit eines Druckgebers ausschließlich durch das PPC-Verfahren, Der Druckaufbau in den Radbremsen RB2 und RB4 erfolgt ebenfalls bei jeweils geöffnetem Schaltventil SV2 bzw. SV4 über die Druckversorgungseinrichtung DV1 vorzugsweise ebenfalls mit dem PPC-Verfahren, wobei der Druckabbau in diesen Radbremsen alternativ über die zugeordneten Auslassventile AV1, AV2 in das Vorratsbehältnis VB oder über das geöffnete Schaltventil SV2 bzw. SV4 im PPC-Verfahren erfolgt. Somit ist auch ein Druckaufbau in den Radbremsen möglich wobei gleichzeitig ein Druckabbau in einer Radbremse RB2 bzw. RB4 über das zugehörige Auslassventil AV1 bzw. AV2 erfolgt. Auch ist eine Kombination des PPC-Verfahrens mit der PWM-Steuerung ein mögliches Steuerverfahren. Hierbei sind die Schaltventile SV2 und SV4 oder nur ein Schaltventil SV2 bzw. SV4 geöffnet bzw. ein Schaltventil oder beide Schaltventile werden im PWM-Verfahren getaktet und Auslassventil AV1 und/oder AB2 ist entweder geöffnet oder wird ebenfalls getaktet. Dieses Verfahren ist eine Alternative zum bekannten Multiplex-Verfahren, wo Schaltventile digital geöffnet oder geschlossen werden und der Druckabbau sequentiell oder simultan erfolgt und baut auf dem Verfahren in DE 102015103858 auf. Die Auslassventile AV1 und AV2 können auch anderes positioniert werden wie in Figur 1a zu den Radbremsen einer Achse bzw. einem Bremskreis zugeordnet sein. Die Regelung erfolgt analog wie oben beschrieben.

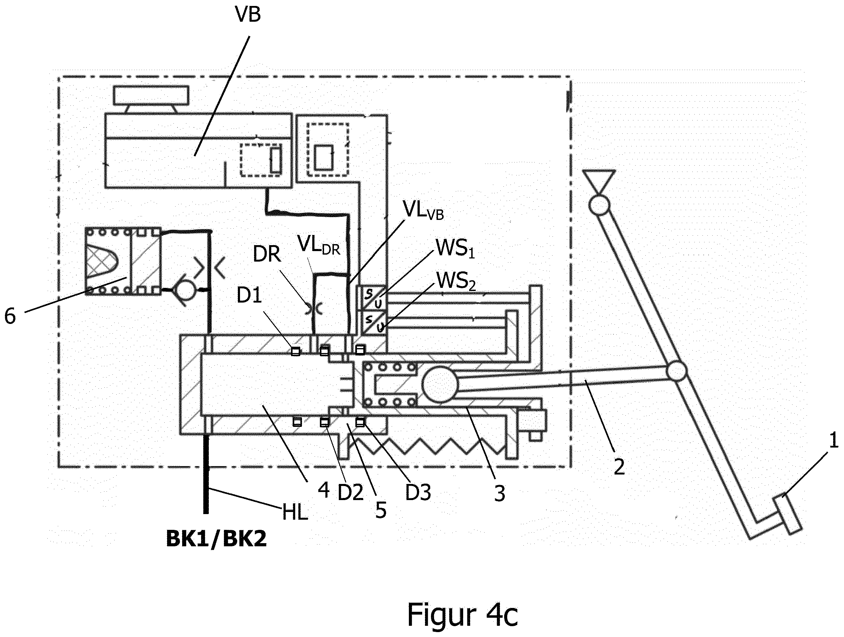

Die Figur 4c zeigt eine Ausführungsform einer Betätigungseinrichtung BE mit Bremspedal 1, Stößel 2, Kolben 3, Zylinder 5 und Pedalgefühlsimulator 6 zum Druckaufbau in einem oder mehreren Bremskreis(en) BK1 und/oder BK2. Der Kolben 3, der 3 Dichtungen x im Zylinder 5 aufweist wird über den Stößel 2 vom Bremspedal 1 nach links verstellt, wodurch im Druckraum 4 ein Druck aufgebaut bzw. ein Druckvolumen über die Hydraulikleitung HL in die Bremskreise BK1/BK2 gefördert wird. Zusätzlich sind noch redundante Dichtungen im Zylinder sowie jeweils parallele hydraulische Leitungen zum Vorratsbehälter jeweils zwischen den Dichtungen vorgesehen, wobei eine Dichtung eine Drossel aufweist. Damit kann sicher der Ausfall von einer Dichtung sicher diagnostiziert werden und es steht eine zuverlässige Betätigungssystem mit Pedalgefühlsimulator und Dichtungssystem mit Mehrfachredundanz sowie Druckerzeugungsmöglichkeit bei Ausfall der elektromotorischen Druckversorgungseinrichtung zur Verfügung.

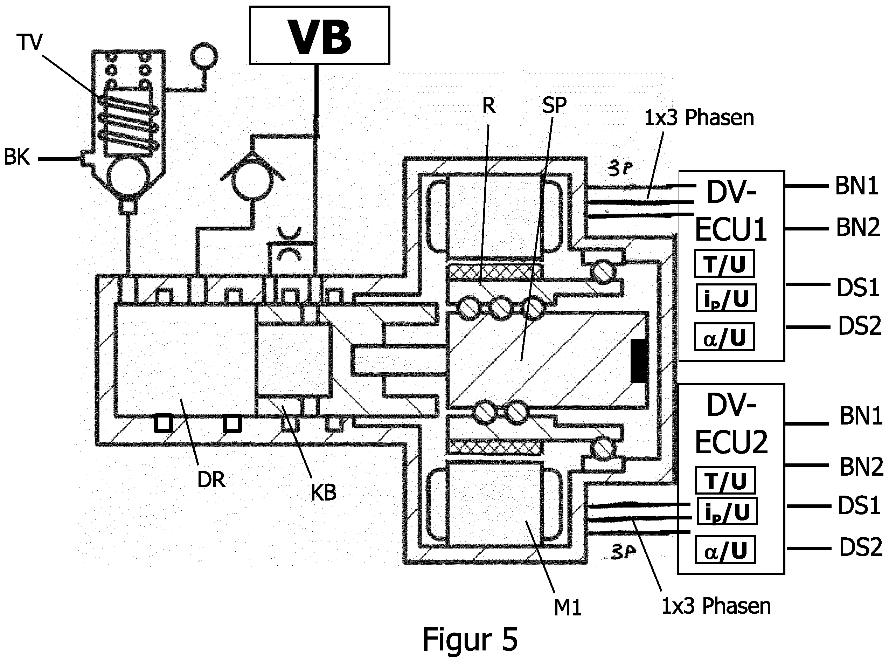

Die Figur 5 zeigt eine mögliche Ausführungsform einer Druckversorgungseinrichtung DV1 mit zwei Steuer- und Regeleinrichtungen DV-ECU1 und DV-ECU2. Die Druckversorgungseinrichtung weist einen Elektromotor M1 auf, dessen Rotor R eine Spindel SP verstellt, welche mit einem Kolben KB in Verbindung ist. Durch das Verstellen des Kolbens KB kann ein Druck im Druckraum DR aufgebaut werden, welche über das Trennventil TV in einen Bremskreis BK geleitet werden kann. Der Kolben ist über mehrere Dichtungen im Zylinder abgedichtet, wobei wie bei der Betätigungseinheit BE ein redundantes diagnostizierbares Dichtungssystem geschaffen wird. Auch bei der Druckversorgungseinrichtung führt zwischen den Dichtungen je eine Hydraulikleitung zum Vorratsbehälter. Somit ist die Druckversorgung auch bei Ausfall einer Dichtung noch voll betriebsfähig und redundant. Über ein Rückschlagventil ist der Druckraum DR mit dem Vorratsbehälter verbunden. Somit kann die Druckversorgung nachfördern. Jede der beiden Steuer- und Regeleinrichtungen DV-ECU1 und DV-ECU2 sind über 1x3 Phasenleitungen mit jeweils getrennten Wicklungs- bzw. Phasensystemen des Motors M1 in Verbindung, so dass bei Ausfall einer Steuer- und Regelungseinrichtung bzw. eines Wicklungssystem der Motor M1 noch über das andere Wicklungs- bzw. Phasensystem und die andere Steuer- und Regeleinrichtung betrieben werden kann, auch wenn dann nur noch ca. das halbe Drehmoment mittels des Antriebes M1 erzeugbar ist. Eine oder beide Steuer- und Regeleinrichtung(en) weist bzw. weisen Sensoren zur Ermittlung der Temperatur T, des Motorstroms i sowie des Rotorwinkels des Elektromotors $\alpha$ auf. Zur Erzielung einer hohen Verfügbarkeit sind die nicht nur Steuer- und Regeleinrichtungen DV-ECU redundant ausgebildet, sondern auch Stromversorgungen BN1, BN2 sowie Daten- und Steuerleitungen DS1 und DS2 doppelt vorgesehen. Die Stromversorgungen BN1 und BN2 können z.B. unterschiedliche Spannungsniveaus eines Bordnetzes oder getrennte Bordnetze sein.

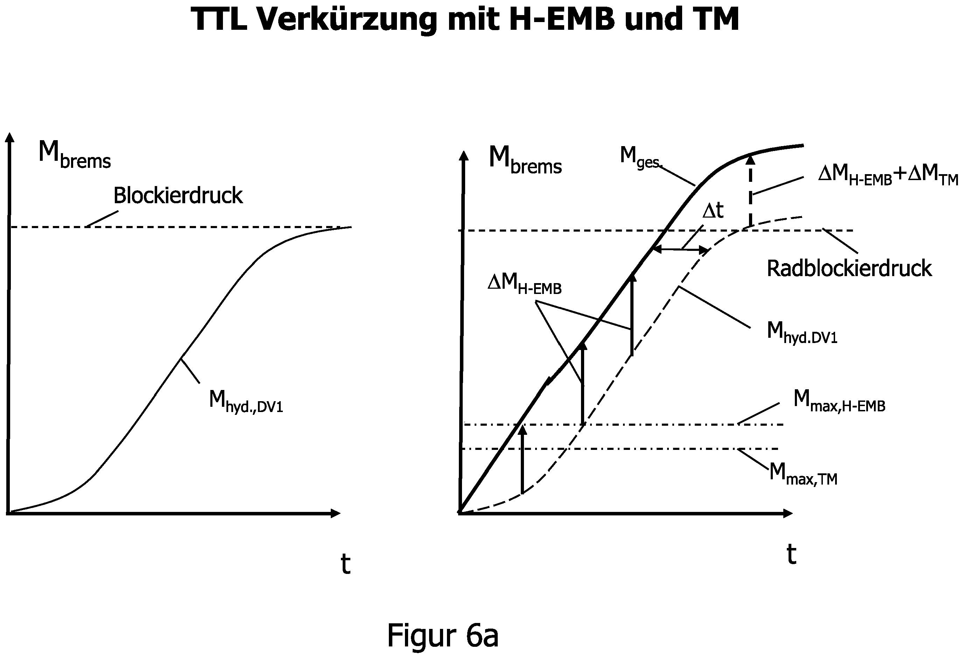

Die Figur 6a zeigt Momentendiagramme zur Darstellung der Bremskraftunterstützung mittels hydraulisch unterstützter elektromechanischer Bremse H-EMB und Traktionsmotor TM. Im linken Diagramm ist der Momentenverlauf $M_{hyd,DV1}$, welcher allein mittels der Druckversorgungseinrichtung DV1 erzielbar ist, dargestellt. Im rechten Diagramm ist der Momentenverlauf dargestellt, wie mittels Hinzunahme der hydraulisch unterstützten elektromechanischen Bremse H-EMB und eines Traktionsmotors TM erzielbar ist. Es steht ein maximales Drehmoment $M_{max, H-EMB}$ von H-EMB bzw. $M_{max,TM}$ des Traktionsmotors zur Verfügung. Durch das zusätzlich durch Traktionsmotor TM erzeugt Bremsmoment $M_{max,TM}$ sowie das mittels der H-EMB erzeugte Bremsmoment $\Delta M_{H-EMB}$ wird der Blockierdruck (horizontale gestrichelte Linie) um die Zeitspanne $\Delta t$ eher erreicht. Auch kann ein deutlich größeres Bremsmoment erzeugt werden.

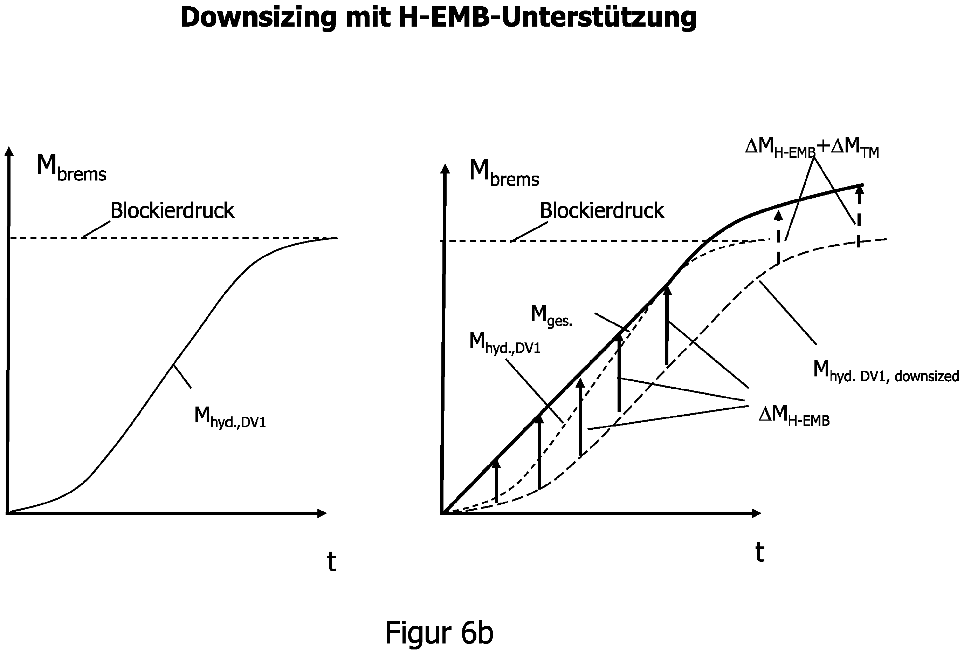

Die Figur 6b zeigt die Möglichkeit des Downsizings der Druckversorgungseinrichtung DV1 auf, sofern die Bremswirkung der hydraulisch unterstützten Bremse (H-EMB) gemäß Figur 4a bei der Druckregelung mit einbezogen wird. So sollte die Druckversorgungseinrichtung DV1 nicht hinsichtlich ihres maximal aufbaubaren Druckes reduziert werden, sondern hinsichtlich ihrer Dynamik, womit der Elektromotor günstiger herstellbar ist.

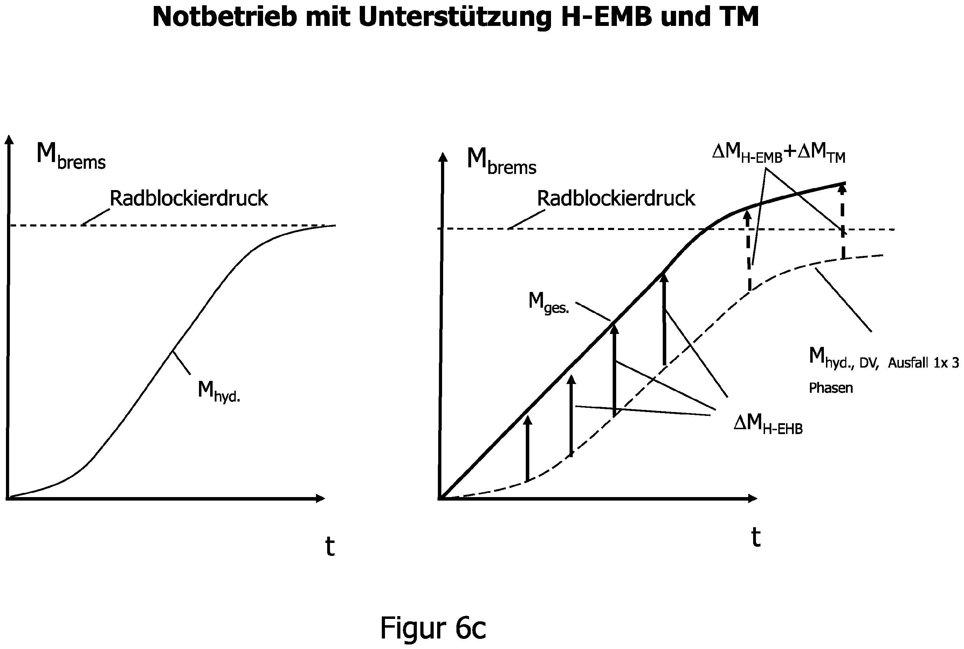

Die Figur 6c zeigt Momentendiagramme zur Darstellung der Bremskraftunterstützung mittels hydraulisch unterstützter elektromechanischer Bremse H-EMB und Traktionsmotor TM im Notbetrieb bei Ausfall eines Wicklungs- bzw. Phasensystems 1x3 Phasen des Antriebs M1. Durch den Wegfall eines Wicklungssystems kann die Druckversorgung DV1 nicht mehr den erforderlichen Druckaufbau bis zum Blockierdruck aufbauen und ist auch nicht mehr dynamisch genug. Durch die Verwendung der hydraulisch unterstützen elektromechanischen Bremse H-EMB sowie des bzw. der Traktionsmotor(en) kann die erforderliche Dynamik und der benötigte Bremsdruck aufgebaut werden (rechtes Diagramm).

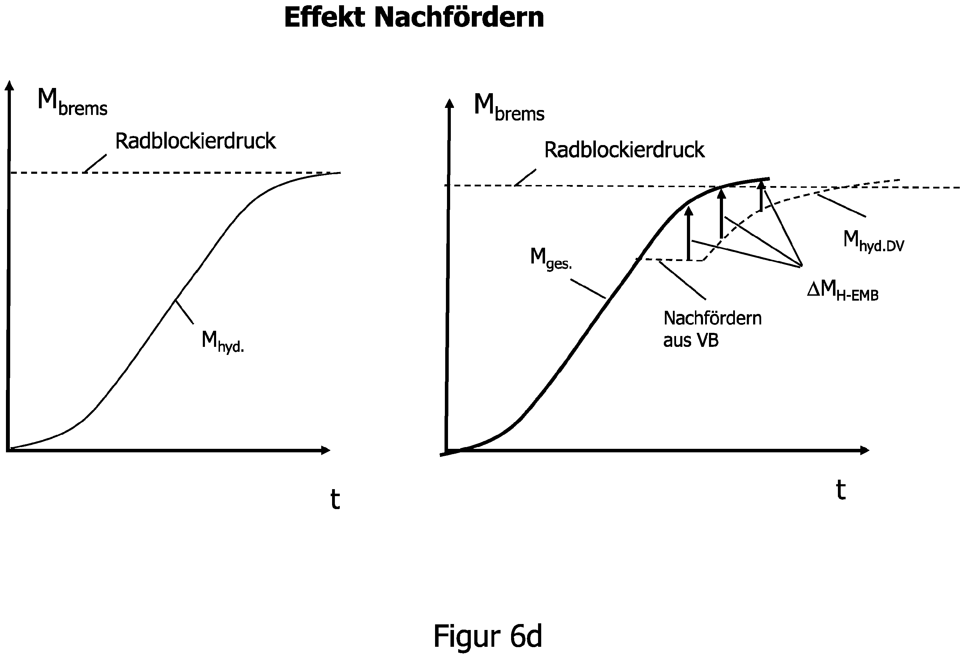

Die Figur 6d zeigt Momentendiagramme zur Darstellung des Bremsmomentenverlaufs $M_{brems}$ während des Nachförderns von Bremsfluid. Während des Nachfördern aus dem Vorratsbehälter VB kann mittels der Druckversorgungseinrichtung DV1 kein weiter Bremsdruck aufgebaut werden. Durch die Hinzunahme der Bremsmomente $M_{max,TM}$ des Traktionsmotors TM sowie das mittels der H-EMB erzeugte Bremsmoment $\Delta M_{H-EMB}$ kann auch während des Nachfördern das Bremsmoment $M_{brems}$ weiter erhöht werden, wodurch eine Unterbrechung des Druckaufbaus vermieden wird.

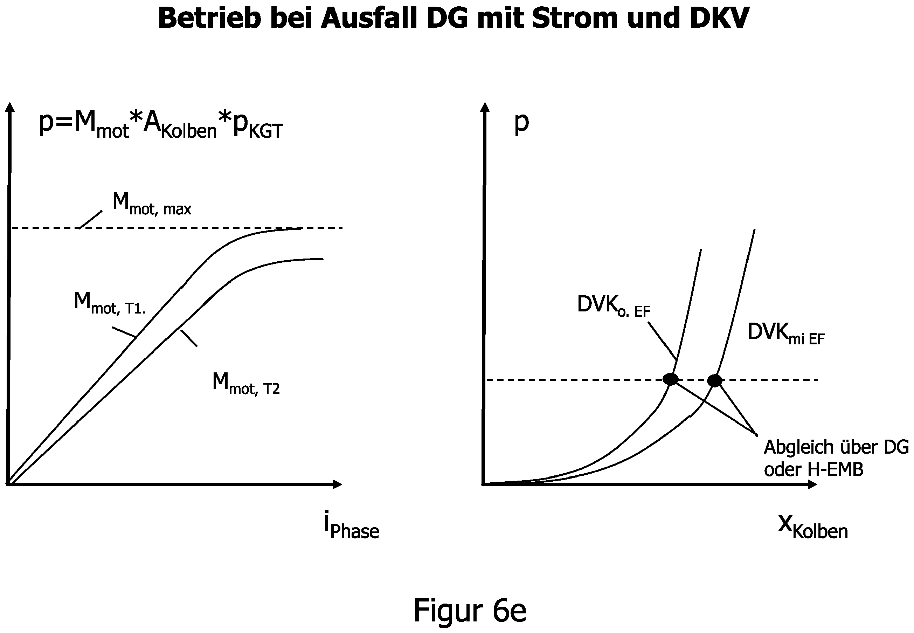

Die Figur 6e zeigt eine Bremsdruckregelung bei Ausfall des Druckgebers DG, wobei dann mittels Strom-

messung des Motorstroms $i_{phase}$ und Auswertung der Druck-Volumen-Kennlinie eine Regelung des Motormomentes $M_{Mot}$ und damit der Regelung des Drucks p vorgenommen wird. Dabei wird auch die Motortemperatur T berücksichtigt, da unter Temperatur sich die Drehmomentkonstante reduziert und somit einen Einfluss auf den Proportionalitätsfaktor kt * (1-Br%*ΔT) zwischen Motormoment $M_{Mot}$ und Motorstrom $i_{phase}$ hat. Hierdurch ergibt sich vorteilhaft eine Redundanz der Druckmessung. So kann auch auf einen Druckgeber verzichtet werden. Die Kalibrierung der Regelung erfolgt dabei durch den Druckgeber und es wird primär mit Strom, Weg und Druckvolumenkennlinie geregelt werden.

Wobei

$$M_{mot} = kt* \; i_{phase}*(1- \; Br\%* \; \Delta T)$$

kt: Drehmomentkonstante

Iphase: Phasenstrom

ΔT: Temperaturänderung in k

Br%: typischer Br = kt-Abfall mit Zunahme der Temperatur

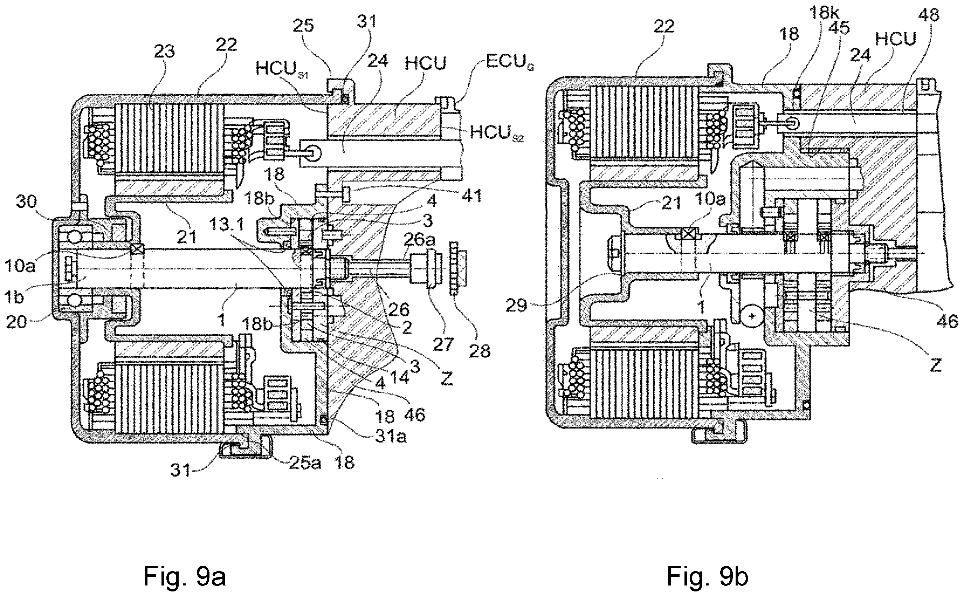

Die **Fig. 9a** zeigt eine Darstellung einer gesamten Baueinheit bestehend aus Motor 22, Pumpe Z, HCU und ECU, welche in der Lage ist, die Druckregelung und Steuerung für Systeme wie z.B. Bremse, Getriebe usw. auszuüben. Hierbei soll im Wesentlichen die Kombination Motor mit Pumpe dargestellt werden. Im Lagerflansch 18 ist die Pumpe angeordnet oder in einem separaten Pumpengehäuse 40, wie es in der oberen Bildhälfte dargestellt ist an HCU oder ECU befestigt. In **Fig. 9a** ist eine Version gezeigt, welche ein zusätzliches Motorlager 20 benötigt, in welchem die Welle 1 gelagert ist. Der Motor setzt sich wie üblich zusammen aus Rotor 21, welcher über den Mitnehmer 10a mit der Welle 1 verbunden ist. Der Rotor 21 wird über einen Permanentmagneten im Gehäuse 30 durch seine Kraft axial vorgespannt. Dies ist eine Lösung für den Motorhersteller, welcher Motor mit Gehäuse 22 und Stator und Wicklung 23 fertigt, prüft und an den Systemlieferanten zuliefert. Hierbei wird der Motor ohne Pumpe mit einer Hilfswelle geprüft. Danach wird bei Ausbau der Welle der Rotor durch die axiale Magnetkraft zentriert, so dass anschließend bei der Endmontage die Welle 1 mit dem Rotor zusammengebaut werden kann. Das Antriebsgehäuse muss hier zusätzlich mit dem Flansch 18 bei 25a - in der unteren Bildhälfte dargestellt - zusammengefügt und befestigt werden, z. B. mit Federn, welche segmentförmig über drei Verbindungen aufgesteckt werden. Hierbei ist auch eine Gehäusedichtung 31 notwendig. Die Befestigung kann durch Verstemmen, bei 25 von Motorflansch mit HCU oder ECU, siehe obere Bildhälfte 28, erfolgen. Hier ist die Version Pumpe mit Pumpengehäuse dargestellt. Der Motor ist hier als bürstenloser Motor dargestellt, der einen Motorsensor für die Kommutierung und Steuerung der Volumenförderung der Pumpe braucht. Dieser Motorsensor ist entfernt vom Antriebsgehäuse 22 angeordnet, wobei eine Sensorwelle 26, welche an der Antriebswelle 1 angeordnet bzw. befestigt ist, ein Sensortarget 27 trägt. Dieses Target 27 wirkt auf das Sensorelement 28, welches auf der Leiterplatte der ECU angeordnet ist. Die Wicklung ist über Kontaktschienen 24 mit der ECU verbunden.

Der Motor mit Lagerflansch 18 kann direkt mit dem Hydraulikgehäuse HCU, welches Ventile oder sonstige hydr. Komponenten beinhaltet, mit der Pumpe verbunden werden. Wenn dies nicht der Fall ist, so bietet sich eine Verbindung des Antriebsgehäuses 22, 18 direkt mit dem Gehäuse der ECU an.

Es ist ebenso möglich, die Zahnradpumpe Z in einem Pumpengehäuse 40 anzuordnen, welches direkt mit Hydraulikgehäuse HCU verbunden wird, wie es in **Figur 9a** in der oberen Hälfte der Antriebswelle 1 dargestellt ist. Vor dem Zusammenbau von Pumpengehäuse 40 und Hydraulikgehäuse HCU bzw. Pumpengehäuse 40 und ECU wird zunächst die Zahnradpumpe Z im Pumpengehäuse 40 integriert bzw. montiert, wobei anschließend der Rotor 21 auf die Welle 1 aufgepresst und anschließend mit dem Lager 20 zusammengebaut wird. Hierbei kann die Zugkraft des Magneten 30 zusätzlich auf den Rotor 21 und das Lager 20 wirken, womit das Lager wie ein Vierpunktlager wirkt. Damit ist das Motorgehäuse 22 mit der Zahnradpumpe Z und deren Pumpengehäuse 40 verbunden und kann im nächsten Schritt mit dem Hydraulikgehäuse HCU bzw. dem Elektronikgehäuse ECU verbunden werden. Dazu wird die Befestigungsschraube 41 verwendet. Die Welle 1 ist zuvor in den Außenscheiben 7.1 und 7.2 zentriert, so dass das Pumpengehäuse 40 vor der Verschraubung mit dem Hydraulikgehäuse HCU bzw. dem Elektronikgehäuse ECU mit der Welle 1 zentriert ist.

Die Druckversorgungseinrichtung gemäß **Fig. 9b** verwendet eine 2-stufige Pumpe mit langer Gleit- oder Wälzlagerung, welche keine getrennte Motorlagerung erfordert. Dementsprechend ist der Motoraufbau mit Gehäuse vereinfacht. Der Rotor 21 sitzt mit Mitnehmer 10a auf der Motorwelle und ist axial mit dem Sicherungsring verbinden. Das Pumpengehäuse ragt hier etwas in die HCU hinein.

**Patentansprüche**

1. Bremssystem für ein Fahrzeug, folgende Komponenten aufweisend:

   - mindestens einen hydraulischen Bremskreis (BK1) mit mindestens einer hydraulisch wirkenden Radbremse (RB1),
   - eine von einem elektromotorischen Antrieb (M1) angetriebene Druckversorgungseinrichtung (DV1) zur Druckregelung in der mindestens einen Radbremse (RB1)

- mindestens eine elektronische Steuer- und Regeleinrichtung (DV ECU1) und

- eine Ventilanordnung (HCU) mit Ventilen zum radindividuellen Einstellen von Bremsdrücken

- eine Betätigungseinrichtung (BE) zur Erfassung des Fahrerwunsches

- mindestens ein Bremsaggregat, in Form eines elektrischen Antriebsmotors (TM) mit einer Leistung von größer gleich 30 KW und/oder einer elektromechanischen Bremse (EMB),

- mindestens ein elektrischer Antriebsmotor (TM1) für mindestens eine Achse oder ein Rad des Fahrzeugs, welcher zum Antrieb und Abbremsen der Achse oder des Rades genutzt wird,

- eine zentrale Steuereinheit (M-ECU) zur Ansteuerung des Bremssystems und des mindestens einen elektrischen Antriebsmotors (TM1), wobei eine oder mehrere Komponenten oder deren Teilkomponenten des Bremssystems redundant ausgebildet ist bzw. sind, und wobei bei Teilausfall oder Komplettausfall des Bremssystems eine Bremskraft an mindestens einer Achse oder mindestens einem Rad mittels der noch funktionsfähigen Komponenten des Bremssystems, der Betätigungseinrichtung und/oder mindestens eines Bremsaggregates erzeugbar ist

wobei die Druckregelung für die mindestens eine Radbremse (RB1) nur einer ersten Fahrzeugachse, insbesondere der Vorderachse (VA), über die Druckversorgungseinrichtung (DV1) erfolgt, wobei die andere zweite Fahrzeugachse, insbesondere Hinterachse (HA), elektromechanische Bremsen (EMB) oder elektrische Parkbremsen (EPB) aufweist und zumindest einen elektrischen Antriebsmotor bzw. Traktionsmotor (TM1, TM2) aufweist.

2. Bremssystem nach Anspruch 1, **dadurch gekennzeichnet, dass** das Bremssystem, insbesondere auch die elektronischen Steuer- und Regeleinheiten (DV-ECU1, DV-ECU2) der Druckversorgungseinrichtung (DV1), von einer übergeordneten Steuerungseinheit (M-ECU) gesteuert wird.

3. Bremssystem nach einem der vorhergehenden Ansprüche, **dadurch gekennzeichnet, dass** die Betätigungseinrichtung (BE) in Form eines Pedalgefühlsimulator ausgebildet ist.

4. Bremssystem nach einem der vorhergehenden Ansprüche, wobei die Betätigungseinrichtung (BE) eine eigene Baugruppe bildet, welche an der Spritzwand des Fahrzeuges befestigt ist.

5. Bremssystem nach einem der vorhergehenden Ansprüche, **dadurch gekennzeichnet, dass** die Betätigungseinrichtung (BE) eine, insbesondere mittels eines Bremspedals (1), betätigbare Kolben-Zylinder-Einheit (HZ) mit einem Kolben aufweist, die mit mindestens einem hydraulischen Bremskreis (BK1, BK2), insbesondere dem Bremskreis mit den Radbremsen der Vorderachse (VA), verbunden bzw. verbindbar ist.

6. Bremssystem nach einem der vorhergehenden Ansprüche, **dadurch gekennzeichnet, dass** mindestens eine Radbremse, vorzugsweise zwei Radbremsen, eine hydraulisch unterstützte elektromechanische Bremse (H-EMB), eine elektrische Parkbremse (EPB) oder eine elektromechanische Bremse (EMB) ist oder neben der Radbremse (RB1-RB4) eine zusätzliche Parkbremse (EPB) oder elektromechanische Bremse (EMB) auf das Rad abbremsend einwirkt.

7. Bremssystem nach einem der vorhergehenden Ansprüche, **dadurch gekennzeichnet, dass** das Bremssystem, insbesondere auch die elektronischen Steuer- und Regeleinheiten (ECU1, ECU2) der Druckversorgungseinrichtung (DV1, DV), von einer übergeordneten Steuerungseinheit (M-ECU) gesteuert wird.

8. Bremssystem nach einem der vorhergehenden Ansprüche, **dadurch gekennzeichnet, dass** der mindestens eine elektrische Antriebsmotor (TM1, TM2) für je mehrere Achsen oder mehrere Räder einer Achse des Fahrzeugs vorgesehen sind und die Antriebsmotoren (TM1, TM2) beim Abbremsen einer oder mehrerer Achsen bzw. Räder zur Rekuperation von Bremsenergie genutzt wird.

9. Bremssystem nach einem der vorhergehenden Ansprüche, **dadurch gekennzeichnet, dass** die übergeordnete Steuerungseinheit (M-ECU) die Druckversorgungseinrichtung (DV, DV1), Ventile, elektrischen Antriebsmotoren (TM1, TM2) und/oder EMB bzw. H-EMB während des Bremsvorganges und/oder ABS-Regelbetriebes und/oder zur Diagnose des Bremssystems ansteuert.

10. Bremssystem nach einem der vorhergehenden Ansprüche, **dadurch gekennzeichnet, dass** ein kombinierter Einsatz von Druckversorgungseinrichtungen (DV1), hydraulisch unterstützter elektromechanischen Bremsen) (H-EMB), elektrische(n) Parkbremse(n) (EPB) und/oder elektromechanische(n) Bremse(n) (EMB) und/oder Antriebsmotor(en) (TM, TM1, TM2) im Regelbetrieb für einen schnelleren Bremskraftanstieg mit kürzerer Zeit zum Aufbau des Blockierdrucks (Time to Lock - TTL) oder bei Ausfall einer oder mehrerer Komponenten des Bremssys-

**11.** Bremssystem nach einem der vorhergehenden Ansprüche, **dadurch gekennzeichnet, dass** mindestens eine hydraulisch unterstützte elektromechanische Bremse (H-EMB) vorgesehen ist, welche über eine Hydraulikleitung mit einer Druckversorgungseinrichtung (DV1), DV2) verbindbar ist und durch Druckaufbau oder Druckabbau durch die Druckversorgungseinrichtung eine hydraulische Kraft ($F_{hyd}$) erzeugt wird, wobei zusätzlich über einen Elektromotor (EM) und eine nichthydraulische Getriebevorrichtung ($F_{EM}$) auf die Radbremse eine Kraft erzeugt wird und beide Kräfte gleichzeitig oder unabhängig voneinander auf die Bremsscheibe wirken.

**12.** Fahrdynamiksystem mit einem Bremssystem nach einem der vorhergehenden Ansprüche, **dadurch gekennzeichnet, dass** das Fahrdynamiksystem mittels des Bremssystems, der elektrischen Antriebsmotoren und einer elektrischen Servolenkung (EPS), insbesondere auch mittels mindestens einer hydraulisch unterstützten Bremse (H-EMB) und/oder mindestens einer elektrischen Parkbremse (EMB), fahrdynamische Regelfunktionen des Fahrzeugs mit seiner übergeordneten zentralen Steuereinheit (M-ECU) steuert.

**13.** Fahrdynamiksystem nach Anspruch 12, **dadurch gekennzeichnet, dass** die fahrdynamischen Regelfunktionen die elektrische Bremskraftverstärkung (e-BKV), der ABS-Betrieb, die Stabilitätsregelung (ESP), Rekuperation und Lenkung, insbesondere Lenkeingriffe wie Torque-Vektoring, sind.

**14.** Fahrzeug mit einem Bremssystem oder einem Fahrdynamiksystem nach einem der vorhergehenden Ansprüche.

**15.** Fahrzeug nach Anspruch 14, **dadurch gekennzeichnet, dass** der bzw. die Traktionsmotor(en) (TM1, TM2) zusammen mit der bzw. den elektromechanischen Bremse(n) (EMB) bzw. elektrischen Parkbremse(n) (EPB) zum Antrieb und Abbremsen der Räder der zweiten Achse (HA) verwendet wird bzw. werden.

**16.** Verfahren zum Betrieb eines Bremssystems nach einem der Ansprüche 1 bis 11 oder eines Fahrzeuges nach Anspruch 14 oder 15, **dadurch gekennzeichnet, dass** mindestens achsweise, vorzugsweise radindividuell, die Verzögerung der Räder mittels der Druckversorgungseinrichtung und den elektrischen Antriebsmotor(en) (TM1, TM2) und/oder der hydraulisch unterstützten elektromechanischen Bremse (H-EMB) bzw. der elektromechanischen Bremse (EMB), erfolgt.

**17.** Verfahren nach Anspruch 16 oder zum Betrieb eines Bremssystems nach einem der Ansprüche 1 bis 11, **dadurch gekennzeichnet, dass** achsweise die Verzögerung der Räder mittels der Druckversorgungseinrichtung und gleichzeitig mit mindestens einem Antriebsmotor (TM1, TM2) erfolgt, wodurch gleichzeitig eine Rekuperation und eine elektrische Bremskraftverteilung (EBV) mit unterschiedlichen Bremsmomenten an den Achsen realisiert wird.

**Claims**

**1.** Brake system for a vehicle, having the following components:

- at least one hydraulic brake circuit (BK1) with at least one hydraulically acting wheel brake (RB1),
- a pressure supply device (DV1) driven by an electric motor drive (M1) for regulating pressure in the at least one wheel brake (RB1),
- at least one electronic control and regulating device (DV ECU1) and
- a valve assembly (HCU) with valves for the wheel-specific adjustment of brake pressures,
- an actuating device (BE) for detecting the driver input,
- at least one brake unit, in the form of an electric drive motor (TM) with a power greater than or equal to 30 kW and/or an electromechanical brake (EMB),
- at least one electric drive motor (TM1) for at least one axle or one wheel of the vehicle, which is utilized to drive and decelerate the axle or the wheel,
- a central control unit (M-ECU) for actuating the brake system and the at least one electric drive motor (TM1),
wherein one or more components or their subcomponents of the brake system is or are formed redundant, and
wherein, in the event of a partial failure or complete failure of the brake system, a brakeforce can be generated on at least one axle or at least one wheel by means of the components of the brake system, of the actuating device and/or of at least one brake unit that are still able to function,
wherein the pressure regulation for the at least one wheel brake (RB1) only of one, first vehicle axle, in particular the front axle (VA), is effected via the pressure supply device (DV1), wherein the other, second vehicle axle, in particular the rear axle (HA), has electromechanical brakes (EMB) or electric parking brakes (EPB) and has at least one electric drive motor or traction motor (TM1, TM2).

2. Brake system according to claim 1, **characterized in that** the brake system, in particular also the electronic control and regulating units (DV-ECU1, DV-ECU2) of the pressure supply device (DV1), is controlled by a superordinate control unit (M-ECU).

3. Brake system according to one of the preceding claims, **characterized in that** the actuating device (BE) is formed in the form of a pedal feel simulator.

4. Brake system according to one of the preceding claims, wherein the actuating device (BE) forms a separate module, which is fastened to the bulkhead of the vehicle.

5. Brake system according to one of the preceding claims, **characterized in that** the actuating device (BE) has a piston-cylinder unit (HZ), actuatable in particular by means of a brake pedal (1), with a piston which is or can be connected to at least one hydraulic brake circuit (BK1, BK2), in particular the brake circuit with the wheel brakes of the front axle (VA).

6. Brake system according to one of the preceding claims, **characterized in that** at least one wheel brake, preferably two wheel brakes, is a hydraulically supported electromechanical brake (H-EMB), an electric parking brake (EPB) or an electromechanical brake (EMB) or, in addition to the wheel brake (RB1-RB4), an additional parking brake (EPB) or electromechanical brake (EMB) has a decelerating effect on the wheel.

7. Brake system according to one of the preceding claims, **characterized in that** the brake system, in particular also the electronic control and regulating units (ECU1, ECU2) of the pressure supply device (DV1, DV), is controlled by a superordinate control unit (M-ECU).

8. Brake system according to one of the preceding claims, **characterized in that** the at least one electric drive motor (TM1, TM2) is provided for each of the several axles or several wheels of an axle of the vehicle and the drive motors (TM1, TM2) are used during the decelerating of one or more axles or wheels for the recuperation of braking energy.

9. Brake system according to one of the preceding claims, **characterized in that** the superordinate control unit (M-ECU) actuates the pressure supply device (DV, DV1), valves, electric drive motors (TM1, TM2) and/or EMB or H-EMB during the braking process and/or normal ABS operation and/or to diagnose the brake system.

10. Brake system according to one of the preceding claims, **characterized in that** a combined use of pressure supply devices (DV1), hydraulically supported electromechanical brake(s) (H-EMB), electric parking brake(s) (EPB) and/or electromechanical brake(s) (EMB) and/or drive motor(s) (TM, TM1, TM2) is effected in normal operation for a faster brakeforce increase with a shorter time for building up the locking pressure (Time to Lock - TTL) or in the event of failure of one or more components of the brake system.

11. Brake system according to one of the preceding claims, **characterized in that** at least one hydraulically supported electromechanical brake (H-EMB) is provided which can be connected to a pressure supply device (DV1, DV2) via a hydraulic line and a hydraulic force ($F_{hyd}$) is generated by pressure buildup or pressure reduction through the pressure supply device, wherein a force is additionally generated on the wheel brake via an electric motor (EM) and a non-hydraulic transmission device ($F_{EM}$) and both forces act on the brake disc at the same time or independently of each other.

12. Vehicle dynamics system with a brake system according to one of the preceding claims, **characterized in that** the vehicle dynamics system controls vehicle-dynamic regulating functions of the vehicle with its superordinate central control unit (M-ECU) by means of the brake system, the electric drive motors and an electric power steering (EPS), in particular also by means of at least one hydraulically supported brake (H-EMB) and/or at least one electric parking brake (EMB).

13. Vehicle dynamics system according to claim 12, **characterized in that** the vehicle-dynamic regulating functions are the electric brake booster (e-BKV), ABS operation, stability control (ESP), recuperation and steering, in particular steering interventions such as torque vectoring.

14. Vehicle with a brake system or a vehicle dynamics system according to one of the preceding claims.

15. Vehicle according to claim 14, **characterized in that** the traction motor(s) (TM1, TM2) is or are used together with the electromechanical brake(s) (EMB) or electric parking brake(s) (EPB) to drive and decelerate the wheels of the second axle (HA).

16. Method for operating a brake system according to one of claims 1 to 11 or a vehicle according to claim 14 or 15, **characterized in that**, preferably for each wheel individually, the deceleration of the wheels, at least axle-wise, is effected by means of the pressure supply device and the electric drive motor(s) (TM1, TM2) and/or the hydraulically supported electromechanical brake (H-EMB) or the electromechanical brake (EMB).

**17.** Method according to claim 16 or for operating a brake system according to one of claims 1 to 11, **characterized in that** the deceleration of the wheels, axlewise, is effected by means of the pressure supply device, and at the same time with at least one drive motor (TM1, TM2), whereby a recuperation and an electric brakeforce distribution (EBV) with different brake torques on the axles are realized at the same time.

## Revendications

**1.** Système de freins pour un véhicule, comportant les composants suivants:

- au moins un circuit de frein hydraulique (BK1) avec au moins un frein de roue à action hydraulique (RB1);
- un dispositif d'alimentation en pression (DV1) entraîné par un entraînement électromotorisé (M1) et destiné à régler la pression dans l'au moins un frein de roue (RB1);
- au moins un dispositif de commande et de réglage électronique (DV ECU1); et
- un agencement de soupape (HCU) doté de soupapes servant au réglage individuel des roues pour la pression de frein;
- un dispositif d'actionnement (BE) destiné à détecter le souhait du conducteur,
- au moins un groupe de freins, sous la forme d'un moteur d'entraînement électrique (TM) avec une puissance supérieure ou égale à 30 KW et/ou un frein électromécanique (EMB),
- au moins un moteur d'entraînement électrique (TM1) pour au moins un essieu ou une roue du véhicule, ledit moteur étant utilisé pour l'entraînement et le freinage de l'essieu ou de la roue;
- une unité de commande centralisée (M-ECU) servant au pilotage du système de freins et de l'au moins un moteur d'entraînement électrique (TM1);
- un ou plusieurs composants du système de freins ou leurs composants partiels étant réalisé ou réalisés de façon redondante; et
en cas de panne partielle ou de panne complète du système de freins, une force de freinage pouvant être produite au niveau d'au moins un essieu ou d'au moins une roue à l'aide des composants encore fonctionnels du système de freins, du dispositif d'actionnement et/ou d'au moins un groupe de freins;
le réglage de pression pour l'au moins un frein de roue (RB1) de seulement un premier essieu de véhicule, notamment de l'essieu avant (VA), disposant d'un agencement d'alimentation en pression (DV1), le deuxième essieu de véhicule supplémentaire, notamment l'essieu arrière (HA), comportant des freins électromécaniques (EMB) ou des freins de stationnement électriques (EPB) et au moins un moteur d'entraînement électrique et/ou un moteur de traction (TM1, TM2).

**2.** Système de freins selon la revendication 1, **caractérisé en ce que** le système de freins, notamment également les unités de commande et de réglage électroniques (DV-ECU1, DV-ECU2) du dispositif d'alimentation en pression (DV1) sont commandés par une unité de commande maître (M-ECU).

**3.** Système de freins selon l'une quelconque des revendications précédentes, **caractérisé en ce que** le dispositif d'actionnement (BE) est réalisé sous la forme d'un simulateur de sensation de pédale.

**4.** Système de freins selon l'une quelconque des revendications précédentes, le dispositif d'actionnement (BE) formant un module propre fixé à la paroi de pareboue du véhicule.

**5.** Système de freins selon l'une quelconque des revendications précédentes, **caractérisé en ce que** le dispositif d'actionnement (BE) comporte une unité piston-cylindre (HZ) équipée d'un piston et pouvant notamment être actionnée à l'aide d'une pédale de frein (1) et qui est reliée et/ou peut être reliée à au moins un circuit de frein hydraulique (BK1, BK2), notamment au circuit de frein comportant les freins de roue de l'essieu avant (VA).

**6.** Système de freins selon l'une quelconque des revendications précédentes, **caractérisé en ce qu'**au moins un frein de roue, de préférence deux freins de roue, est/sont un frein électromécanique à assistance hydraulique (H-EMB), un frein de stationnement électrique (EPB) ou un frein électromécanique (EMB) et qu'en sus du frein de roue (RB1-RB4), un frein de stationnement supplémentaire (EPB) ou un frein électromécanique (EMB) agit sur la roue pour y exercer une action de freinage.

**7.** Système de freins selon l'une quelconque des revendications précédentes, **caractérisé en ce que** le système de freins, notamment également les unités de commande et de réglage électroniques (ECU1, ECU2) du dispositif d'alimentation en pression (DV1, DV) est commandé par une unité de commande maître (M-ECU).

**8.** Système de freins selon l'une quelconque des revendications précédentes, **caractérisé en ce que** l'au moins un moteur d'entraînement électrique (TM1, TM2) est prévu pour respectivement plusieurs essieux ou plusieurs roues d'un essieu du véhicule et que les moteurs d'entraînement (TM1, TM2) sont utilisés pour freiner un ou plusieurs essieux et/ou roues afin de récupérer l'énergie de freinage.

9. Système de freins selon l'une quelconque des revendications précédentes, **caractérisé en ce que** l'unité de commande maître (M-ECU) commande le dispositif d'alimentation en pression (DV, DV1), les soupapes, les moteurs d'entraînement électriques (TM1, TM2) et/ou l'EMB et/ou l'H-EMB pendant le processus de freinage et/ou dans le mode de réglage de l'ABS et/ou à des fins de diagnostic du système de freins.

10. Système de freins selon l'une quelconque des revendications précédentes, **caractérisé en ce qu'**une intervention combinée de dispositifs d'alimentation en pression (DV1), de freins électromécaniques à assistance hydraulique (H-EMB), de frein(s) de stationnement électrique(s) (EPB) et/ou de frein(s) électromécanique(s) (EMB) et/ou de moteur(s) d'entraînement (TM, TM1, TM2) se produit en mode de réglage pour une augmentation plus rapide de la force de freinage en un temps pour court pour utiliser la pression de blocage (Time to Lock - TTL) ou en cas de panne d'un ou de plusieurs composants du système de freins.

11. Système de freins selon l'une quelconque des revendications précédentes, **caractérisé en ce qu'**au moins un frein électromécanique à assistance hydraulique (H-EMB) est prévu, celui-ci pouvant être relié à un dispositif d'alimentation en pression (DV1, DV2) via un câble hydraulique et une force hydraulique ($F_{hyd}$) étant produite par augmentation de pression ou diminution de pression au travers du dispositif d'alimentation en pression, une force étant en outre exercée sur le frein de roue via un moteur électrique (EM) et un dispositif de transmission non hydraulique (FEM) et les deux forces agissant simultanément ou indépendamment l'une de l'autre sur le disque de frein.

12. Système de dynamique de conduite équipé d'un système de freins selon l'une quelconque des revendications précédentes, **caractérisé en ce que** le système de dynamique de conduite commande les fonctions de réglage de dynamique de conduite du véhicule avec son unité de commande centralisée maître (M-ECU) à l'aide du système de freins, des moteurs d'entraînement électriques et d'une servodirection électrique (EPS), notamment également à l'aide d'au moins un frein à assistance hydraulique (H-EMB) et/ou d'au moins un frein de stationnement électrique (EMB).

13. Système de dynamique de conduite selon la revendication 12, **caractérisé en ce que** les fonctions de réglage de dynamique de conduite sont le renforcement de la force de freinage électrique (e-BKV), le fonctionnement de l'ABS, le réglage de stabilité (ESP), la récupération et le pilotage, notamment des interventions de commande comme la vectorisation de couple.

14. Véhicule avec un système de freins ou un système de dynamique de conduite selon l'une quelconque des revendications précédentes.

15. Véhicule selon la revendication 14, **caractérisé en ce que** le et/ou les moteurs de traction (TM1, TM2) est et/ou sont utilisés conjointement avec le et/ou les frein(s) électromécanique(s) (EMB) et/ou frein(s) de stationnement électrique(s) (EPB) pour entraîner et freiner les roues du deuxième essieu (HA).

16. Procédé d'exploitation d'un système de freins selon l'une quelconque des revendications 1 à 11 ou d'un véhicule selon la revendication 14 ou 15, **caractérisé en ce qu'**au moins au niveau de l'essieu, de préférence individuellement pour chaque roue, le ralentissement des roues est réalisé à l'aide du dispositif d'alimentation en pression et du ou des moteur(s) d'entraînement électrique(s) (TM1, TM2) et/ou du frein électromécanique à assistance hydraulique (H-EMB) et/ou du frein électromécanique (EMB).

17. Procédé selon la revendication 16 ou pour l'exploitation d'un système de freins selon l'une quelconque des revendications 1 à 11, **caractérisé en ce qu'**au niveau de l'essieu, le ralentissement des roues se produit à l'aide du dispositif d'alimentation en pression et simultanément avec au moins un moteur d'entraînement (TM1, TM2), permettant simultanément une récupération et une répartition au niveau des essieux de la force de freinage électrique (EBV) avec différents couples de freinage.

Figur 1

Figur 1a

Figur 2

EP 3 898 358 B1

Figur 2a

Figur 3

*Red. Signalübertragung*

M-ECU

**HA**

RB4 — EMB

TM-ECU **TM 1**

RB3 — EMB

**VA**

RB2

TM-ECU **TM 2**

RB1

R-HCU

FV

SV2

SV1

TV

P-ECU

**BE**

VB

DV-ECU

**DV1**

Figur 3a

EP 3 898 358 B1

Figur 4a

Figur 4b

Figur 4c

Figur 5

# TTL Verkürzung mit H-EMB und TM

Figur 6a

EP 3 898 358 B1

# Downsizing mit H-EMB-Unterstützung

Figur 6b

EP 3 898 358 B1

# Notbetrieb mit Unterstützung H-EMB und TM

Figur 6c

EP 3 898 358 B1

# Effekt Nachfördern

Figur 6d

EP 3 898 358 B1

# Betrieb bei Ausfall DG mit Strom und DKV

$$p = M_{mot} * A_{Kolben} * p_{KGT}$$

$M_{mot, max}$

$M_{mot, T1.}$

$M_{mot, T2}$

$i_{Phase}$

$p$

$DVK_{o. EF}$

$DVK_{mi EF}$

Abgleich über DG oder H-EMB

$x_{Kolben}$

Figur 6e

EP 3 898 358 B1

| Zustand | Druck-versorgung (DV) | Einsatz Auslassventile (AV) | Betätigungs-einheit (BE) | Elektrische Antriebsmotoren TM1, TM2 | H-EMB EPB |
|---|---|---|---|---|---|
| Normalbetrieb | Max. Leistung | Nutzung AV in Sondersituation high-m-ABS (Druckabbau über AV), d.h. Bremskreis wird sehr selten geöffnet und ist 90-99% der Zeit geschlossen | Pedalgefühl konstant | • Rekuperation abgestimmt auf Druckregelung DV<br>• Bremsmoment-steigerung | |
| Fehler 1: Ausfall 3-Phasen des Motors der DV | Redziierte. Leistung Betrieb beh höheren Drücken | Einsatz AV zur Verbesserung der Regeldynamik des MUX-Betriebes (Druckabbau über AV) | Pedalgefühl konstant | • Rekuperation ab-gestimmt auf Druckregelung DV<br>• Bremsmoment-steigerung zur Sicher-stellung des Erreichens des Blockierdruckes | Untersützung Bremsmoment Hinterachse |
| Fehler 2: Komplettausfall Druck-versorgung | | | Bremskraftverzögerung bis 0,6g an Vorderachse durch Pedalbestätigung | Verzögerung durch TM an Vorderachse und/oder Hinterachse | Radindividuelle Regelung für Lenkung und Bremse |
| Fehler 3: Ausfall Druckgeber | Regelung und Diagnose mit Strom- und Wegsteuerung | | | | |
| Fehler 4: Luft in Hydraulik | Nachfördern Volumen aus Vorratsbehälter | | | | |

Figur 7

EP 3 898 358 B1

| | e-BKV | ABS | Lenkung/ Torque Vektoring | Stabilität (ESP) | Energie-rückgewinnung | Park-bremse |
|---|---|---|---|---|---|---|
| DV (6 Ph) DV (3Ph) | | | | | | |
| TM1 (HA) | | | | | | |
| TM2 (VA) | | | | | | |
| EPS | | | | | | |
| H-EMB EPB | | | | | | |

Primärfunktion

Sekundärfunktion/ Redundanz

Figur 8

Fig. 9a

Fig. 9b

EP 3 898 358 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112009005541 B3
- DE 102005055751 B4
- DE 102005018649 B4
- EP 1874602 B1
- EP 2396202 B1
- EP 1759447 B1
- WO 201614622 A2
- EP 3271221 A2
- WO 2012059175 A1
- WO 2013140221 A1
- DE 102007015809
- DE 102015103858